(19) Europäisches Patentamt

European Patent Office

Office européen des brevets

(11) Publication number: **0 570 643 A1**

## (12) EUROPEAN PATENT APPLICATION

(21) Application number: **92310570.4**

(22) Date of filing: **19.11.92**

(51) Int. Cl.⁵: **H04Q 7/04**, H04B 7/26

(30) Priority: **18.05.92 US 884666**

(43) Date of publication of application:
**24.11.93 Bulletin 93/47**

(84) Designated Contracting States:
**AT BE CH DE ES FR GB IT LI NL SE**

(71) Applicant: **AMERICAN TELEPHONE AND TELEGRAPH COMPANY**
**32 Avenue of the Americas**
**New York, NY 10013-2412(US)**

(72) Inventor: **Howard, David John**
**894 Benedetti Drive,**
**Apartment No. 203**
**Naperville, Illinois 60563(US)**
Inventor: **Lee, Chinmei Chen**
**6 Bramblebush Court**
**Woodridge, Illinois 60517(US)**
Inventor: **Nimmagadda, Prasad Venkateswara**
**2790 Greenfield Drive**
**Lisle, Illinois 60532(US)**
Inventor: **Phung, Luat Tan**
**2773 Greenfield Drive**
**Lisle, Illinois 60532(US)**
Inventor: **Schiet, Johannes Josephus Christoffel**
**520 West Surf Street,**
**Apartment No. 1N**
**Chicago, Illinois 60657(US)**
Inventor: **Wierzbicki, Alex Lawrence**
**217 Fairwood Drive**
**Bolingbrook, Illinois 60440(US)**

(74) Representative: **Buckley, Christopher Simon Thirsk et al**
**AT&T (UK) LTD.**
**5 Mornington Road**
**Woodford Green Essex IG8 OTU (GB)**

(54) Handover of mobile radio calls between mobile switching centers.

(57) This invention relates to apparatus and methods for providing cellular mobile telecommunication service in accordance with the requirements of the Global Systems for Mobile Communications (GSM) standard. A handover of communications to a mobile station from a first base station to a second base station, the first and second base stations being served by a first and second mobile telecommunications switching system, respectively, is accomplished by changing connections within a switching network of the first switching system from a first port and a second port, to the first port and a third port, the third port being connected via an interoffice trunk to the second base system.

Rank Xerox (UK) Business Services
(3.10/3.6/3.3.1)

FIG. 30

FIG. 32

## Technical Field

This invention relates to cellular mobile telecommunications systems and more specifically to handover arrangements between different switches in such systems.

## Problem

Mobile radio systems for permitting customers calling from mobile stations such as vehicular stations mounted in automobiles, portable stations of medium weight which may be transported readily, or small lightweight, hand held personal communication stations are becoming increasingly prevalent. Such systems use the principles of cellular technology to allow the same frequencies of a common allocated radio bandwidth to be reused in separated local areas or cells of a broader region. Each cell is served by a base transceiver station comprising a group of local transceivers connected to a common antenna. The base station systems, each comprising a controller and one or more transceiver stations are interconnected via a switching system, a mobile switching center, which is also connected to the public switched telephone network. Such cellular systems are now entering a second generation characterized by digital radio communications and a different set of standards such as the European Global Systems for Mobile Communications (GSM) standard, promulgated by the Special Mobile Group (SMG).

It is a basic attribute of cellular technology, when applied to mobile stations that move during the course of a call, for example, vehicular stations that radio communications may have to be transferred or handed over during the course of a call from a frequency and radio communication antenna in the base transceiver station of one cell to a frequency and radio of another transceiver station of a different cell. While, if the two transceiver stations are served by a single base station controller, under the GSM standard this change can be accomplished under the control of that base system controller without invoking the services of a mobile switching center; if it is necessary to switch to a transceiver station served by another base station controller, it is necessary to change a connection in the mobile switching center.

The requirement for maximum "dead" time or "return" time during the handover from one base station transceiver to another controlled by different base station controllers is only 150 milliseconds. According to the teachings of the prior art, such a transition is made by using a conference bridge, i.e., a circuit in which more than two parties (in this case, the two transceiver stations and the other end of the mobile connection) may be simultaneously connected. Such conference bridges are expensive and represent limited resources which if unavailable makes it impossible to perform a handover.

The situation is made even more complicated when it is necessary to handover a call from a base station controlled by one switching system to a base station controlled by another switching system. Under these circumstances, it is not enough to change the configuration within a switch to route a call to a different base station controlled by the same switch but it is necessary to establish a connection to the new switch and to request that that new switch set up a connection to the new base station. Further, it is necessary to coordinate the retuning of the mobile station to the channel of the new base station with the establishment of a connection to the new base station. The situation is further complicated when it is necessary to handover a call, which has been previously handed over from the first mobile switching center to the second mobile switching center, to a third mobile switching center, or back to the first mobile switching center. When a call is handed over from the MSC that establishes the call originally to a second MSC, the handover is called the basic handover. When the call is handed over later to another MSC, the handover is called subsequent handover. Subsequent handovers may be one of two types: the call is handed over to a third MSC, or is handed over back to the first MSC. Accordingly, a problem of the prior art is that there is no low cost arrangement for performing a handover of a mobile radio connection from a transceiver station served by one base station controller to a transceiver station served by another base station controller, wherein the two base station controllers are connected to different mobile switching centers.

## Solution

The above problem is solved and an advance is made over the prior art in accordance with the teachings of this invention wherein a connection is set up between the new base transceiver station and an output of the switch connected to the old transceiver station; after this connection has been established, the old transceiver station signals the mobile radio to tune to the channel of the new transceiver station; thereafter, at essentially the same time, the connection in the switch connected to the old base transceiver station is broken and the connection in that same switch toward the new transceiver station is established.

EP 0 570 643 A1

Advantageously, this arrangement allows a handover to be completed with a dead interval substantially below the required 150 milliseconds.

In one specific embodiment of the invention, the process of breaking the connection to the old transceiver station and completing the connection to the new transceiver station is accomplished in a time slot interchange unit of a switching module that is originally part of the connection to the old base transceiver station; the control memory of the time slot interchange unit is changed to steer time slots from and to the new mobile transceiver station. Following the switch, the trunk to the old transceiver station is released so it can be used for other calls.

In accordance with one specific embodiment of the invention, in the case of basic handovers, the transition in the old switch connected to the old base transceiver station is made after a predetermined time following a message from the second switch indicating that the communication path for the mobile station had been successfully established in that switch and a message has been sent to the mobile station for it to retune to the new base system. In the case of subsequent handovers to a third switch, the transition in the first switch from the path connecting the second switch to the path connecting the third switch is made after a predetermined time following a message from the third switch indicating that the communication path to the radio transceiver in the third switch had been successfully established, and a message has been sent to the second switch for it to request the mobile to retune to the new base system in the third switch.

**Brief Description of the Drawing**

FIG. 1 is a block diagram of the basic GSM model of a mobile switching center and its direct and indirect interfaces;

FIG. 2 illustrates how this model is implemented in one exemplary embodiment;

FIG. 3 illustrates the various signaling protocols used for signaling messages in mobile telecommunications systems;

FIG. 4 illustrates the interconnections among mobile stations, land-based stations, base station systems, the public switched telephone network, and a mobile switching center;

FIG. 5 illustrates the physical paths used for signaling and for voice or data interconnections;

FIGS. 6-8 illustrates the signaling interconnections including the role of the wireless global switch module (WGSM);

FIGS. 9-13 illustrate the process of establishing a mobile to land call;

FIG. 14 illustrates the release of a mobile call;

FIGS. 15-18 illustrate an intra-MSC handover process;

FIGS. 19-21 illustrate the intra-MSC handover process in terms of message exchanges;

FIGS. 22-28 illustrate an incoming call to a mobile station.

FIGS. 29-32 illustrate an inter-MSC handover process;

FIGS. 33-35 illustrate the inter-MSC handover process in terms of message exchanges;

FIG. 36 illustrates a time slot interchange unit for use in performing the inter-MSC handover; and

FIGS. 37-38 illustrate a handover from a second (non-controlling) MSC to a third (target) MSC.

**General Description**

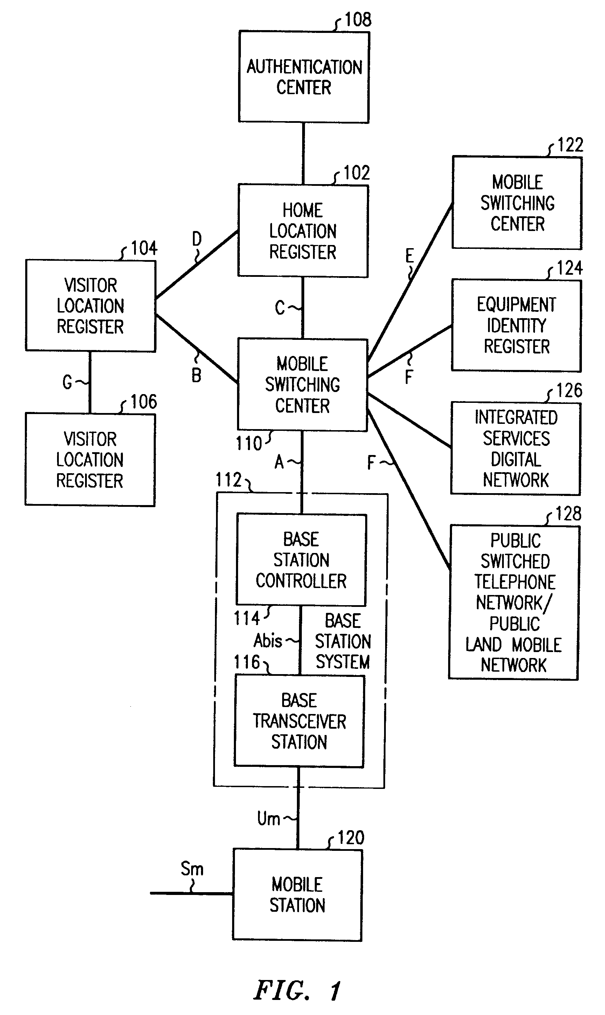

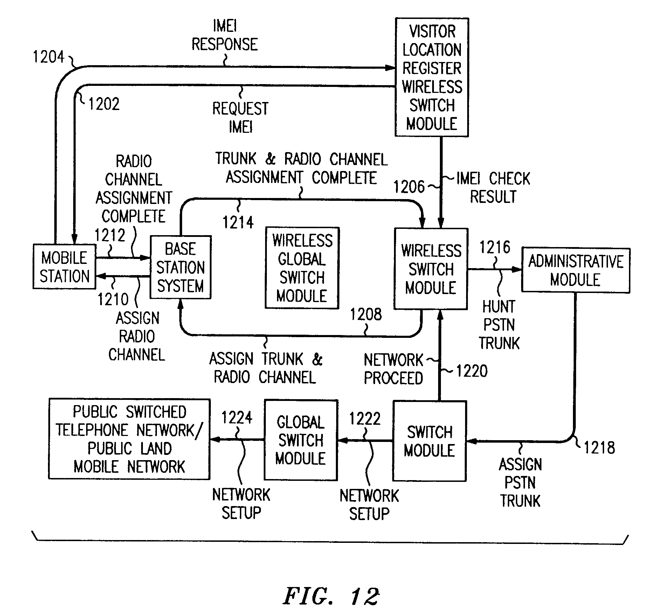

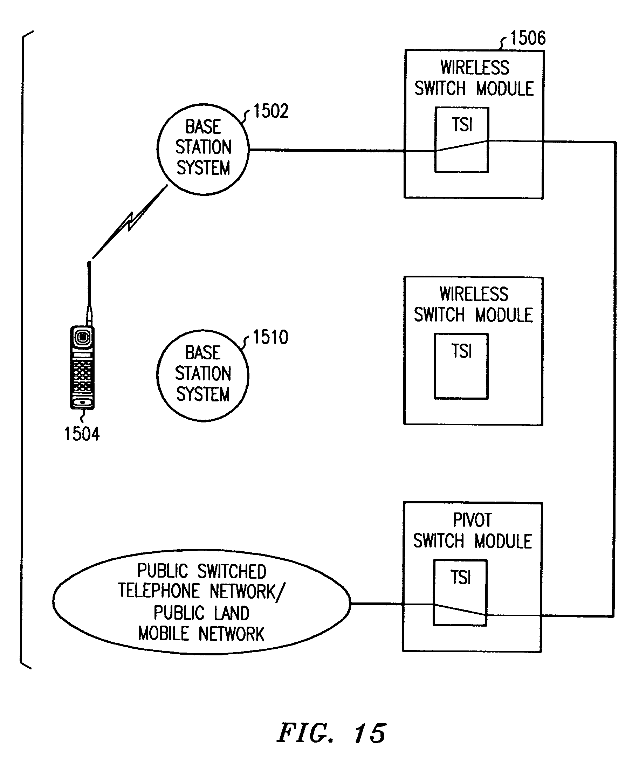

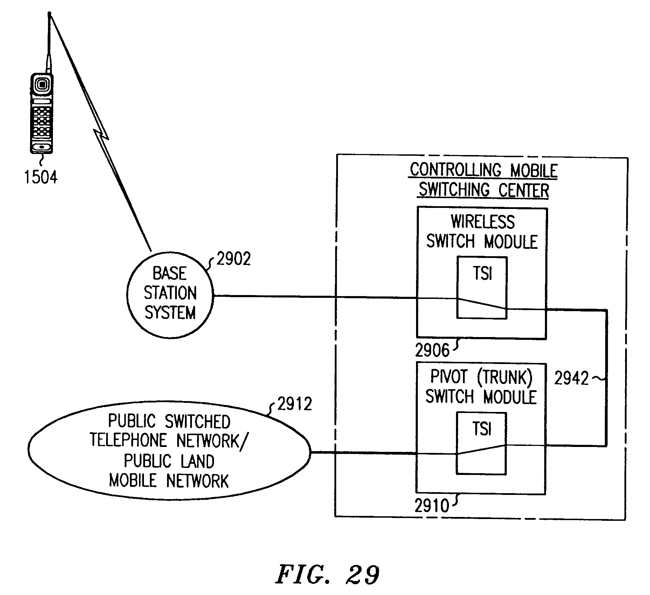

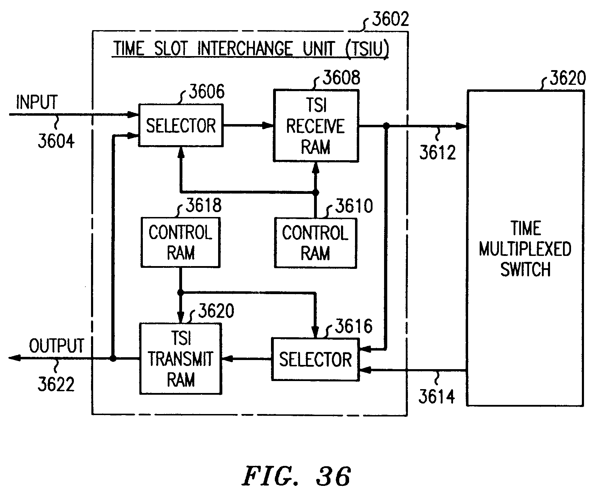

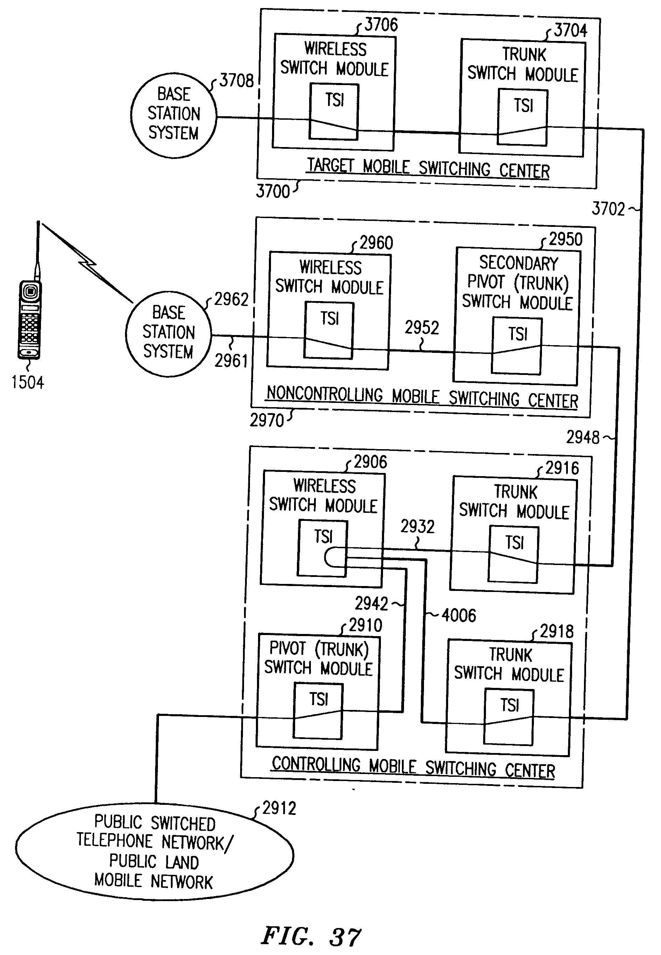

The subject matter of FIGS. 1-14 and 22-28 is presented primarily as background, so that the reader can understand the operation of the exemplary mobile switching center (MSC). FIGS. 15-21 then illustrate the handover process when the handover is between two base stations systems controlled by the same mobile switching center, i.e., an intra-MSC handover process. FIGS. 29-35 illustrate the essential arrangement for implementing the applicant's invention for handling an inter-MSC handover. FIG. 36 illustrates the time slot interchange unit which can be used for performing the inter-MSC handover. FIGS. 37-38 illustrate a handover from a second (non-controlling) MSC to a third (target) MSC. A Glossary at the end of the Detailed Description defines abbreviations used in this specification.

**Detailed Description**

FIG. 1 is a block diagram of the reference model for the European standard, the Global Systems for Mobile Communications (GSM). Each of the lines interconnecting blocks of the diagram that is identified with a letter, has a GSM standard specified interface. Briefly, the purpose of each of the blocks is the following:

4

The Home Location Register (HLR) 102 contains data for a mobile customer. The data stored in the HLR is the permanent data that is independent of the customer's present location, plus temporary data such as the addresses of Service Centers which have stored short messages for a mobile station. (An example of such a message is a request to turn on a "voice message waiting" lamp indicating that a voice message has been stored for the mobile station user in a voice messaging system.) These addresses are erased after the short messages have been delivered. The HLR also indicates the Signaling System 7 point code used to find a module that contains the Visitor Location Register (VLR) 104 currently associated with the mobile station.

The VLR contains current data for each mobile customer, including that customer's mobile station's present or most recently known location area, the station's on/off status, and security parameters. A remote VLR 106 connected via a G interface is also shown.

The authentication center (AUC) 108 provides authentication and encryption parameters to ensure that a mobile customer cannot falsely assume the identity of another mobile customer and provides data for encryption of the voice or data, and control signals transmitted via the air between the mobile station and a serving BSS. The GSM reference model prescribes digital communication over the radio channels. Since it is possible to listen to these radio channels, encryption becomes desirable for the link between the mobile station and the radio transceiver at a base station serving that mobile station.

The Mobile Switching Center (MSC) 110 is for switching calls involving at least one mobile station.

The BSS 112 comprises a base station controller (BSC) 114 and one or more base transceiver stations (BTS) 116 for communicating with mobile stations (MS) 120. The BSS and the MS communicate via radio connections. The BSS is also connected via trunks to carry the voice or data, and signaling/control messages between the mobile stations and the MSC. The BSC and BTS may be in different physical locations (for example, the BSC may be co-located with the MSC) in which case a trunk is required to interconnect the two. $S_m$ represents the human interface to the MS.

The equipment identity register (EIR) 124 retains a record of ranges of certified equipment identifications and ranges of or individual equipment identifications which are under observation or barred from service. The equipment identification information is received from a mobile station at the mobile switching center. The EIR is used to verify that the equipment number of the MS is certified for use in the public network and is not on the observation or service barred list.

Mobile switching centers are connected to other mobile switching centers, directly or via the public switched telephone network/public land mobile network (PSTN/PLMN) 128, to the PSTN/PLMN for accessing land-based and mobile customer stations and to integrated services digital network (ISDN) networks 126 for communicating according to the protocols of ISDN. (The term PSTN as used herein usually also includes the PLMN.)

While the standards specify the functions of each of these blocks, they do not specify how each of these blocks is to be implemented. It is the purpose of this description to illustrate one arrangement for implementing these standards in an advantageous manner.

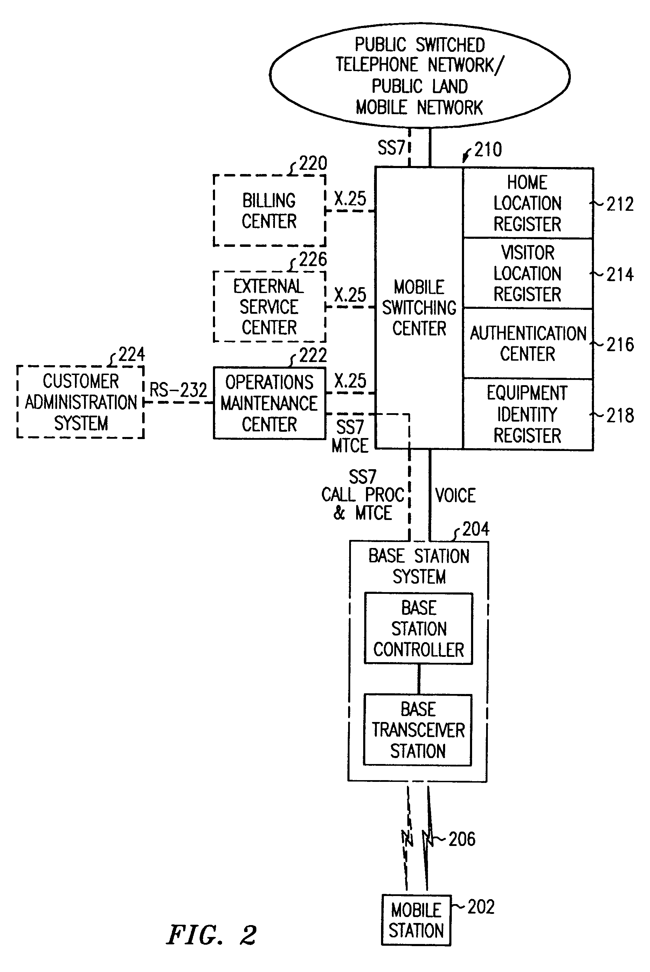

FIG. 2 illustrates the system architecture for implementing a GSM mobile communication system. The mobile station (MS) 202 communicates with the BSS 204 over radio links 206 using optionally encrypted digital radio communications for the voice or data, and control connections between the MS and the BSS. The MS communicates via the BSS with the mobile switching center (MSC) 210. The BSS and MS exchange control messages with the mobile switch center using the CCITT signaling system 7 protocol (SS7).

In this arrangement, the HLR 212, VLR 214, AUC 216 and EIR 218 records are all integrated into the MSC 210. When an MSC needs the HLR, VLR, AUC or EIR records from another network entity, it obtains them via SS7 messages transmitted to the entity that currently holds this information.

The MSC communicates with a billing center 220 for accumulating billing records using the CCITT X.25 protocol and also communicates with an Operations and Maintenance Center (OMC) 222 using the CCITT X.25 protocols. The OMC communicates with BSSs via the MSC using SS7. In one implementation, the OMC communicates with a customer administration system 224 using a standard RS-232 link. In addition, maintenance messages between the BSS and OMC are transmitted using SS7 with the Base Station System Operation Maintenance and Administration Part (BSSOMAP) protocol.

Signaling System 7 is described in detail in A. R. Modarressi et al.: "Signaling System No. 7: A Tutorial," IEEE Communications Magazine, July 1990, pages 19-35. The GSM standard protocols are specified in the GSM standard specifications.

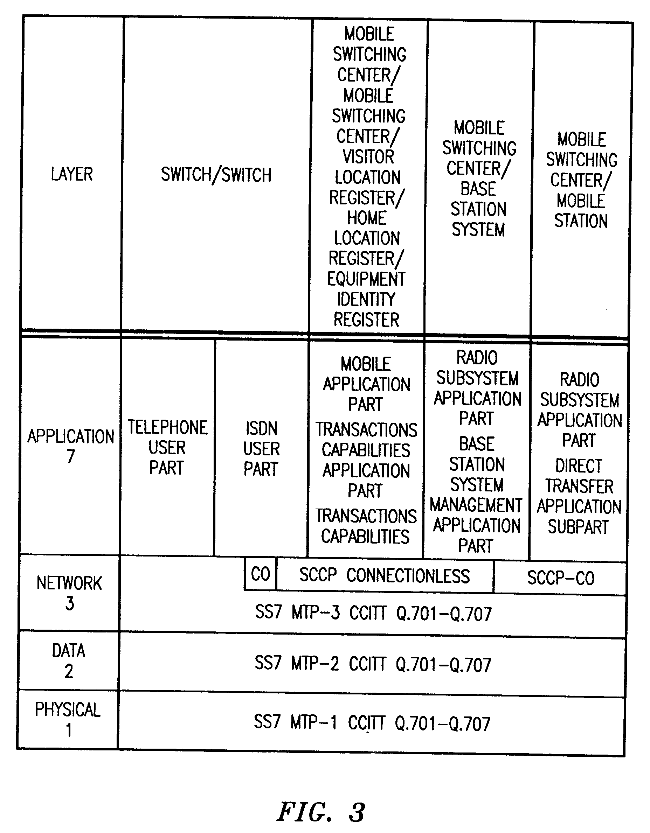

FIG. 3 is a diagram of the protocols used in different types of communications, according to the GSM standard. Most of these protocols are those of SS7. Of the seven layers of the protocol according to the International Standards Organization (ISO) layered message protocol, only the top (application layer) and the bottom three layers (Network, Data and Physical) are shown on the left. Four types of messages are shown: The first double column includes those from switching system to switching system for land-based trunks including either a telephone user part (TUP) or an ISDN user pan (ISUP) (both SS7 standards) for the application layer. The second column is for messages among MSCs, VLR, HLR and EIR which messages use the SS7 standard Transaction Capabilities (TC), Transaction Capabilities Application Part (TCAP) and Mobile Application Part (MAP) sublayers of the application layer (MAP is enhanced with GSM standards). When these messages are strictly internal to the MSC, these protocols are simplified and messages transmitted directly or via protocol handlers between the responsible processors. The third column is for communications between the mobile switching center and a BSS. The final column is for communications between the mobile switching center and mobile station.

The three bottom sublayers of the protocol (layer 1, the physical layer, layer 2, the data layer, and sublayer 3, the message transport part (MTP) sublayer, a sublayer of the network layer) are identical for all of these types of communications and are in accordance with the SS7 Message Transport Part (MTP) standards of the CCITT Q.701 - Q.707 standard. The Signaling Connection Control Part (SCCP), a sublayer of the network layer, also a CCITT standard Q.711-Q.714, is connection oriented for the MSC/MS communications, is connectionless for the second column, and may be either for the MSC/BSS communications. SCCP is available for some ISUP applications. For the first column (switch to switch) the TUP and ISUP application layer communicates directly with MTP 3 sublayer of the network layer.

Communications between the MSC and either the BSS or the mobile station use a Radio Subsystem (Base Station System) Application Part (BSSAP) protocol. For communications between the mobile switching center and the BSS, layer 7 uses the protocols of the BSSAP including a Base Station System Management Application Part (BSSMAP). The communications between the mobile switching center (MSC) and the mobile station are performed in the protocols of BSSAP including a Direct Transfer Application Part (DTAP). BSSAP, including BSSMAP and DTAP are GSM standards.

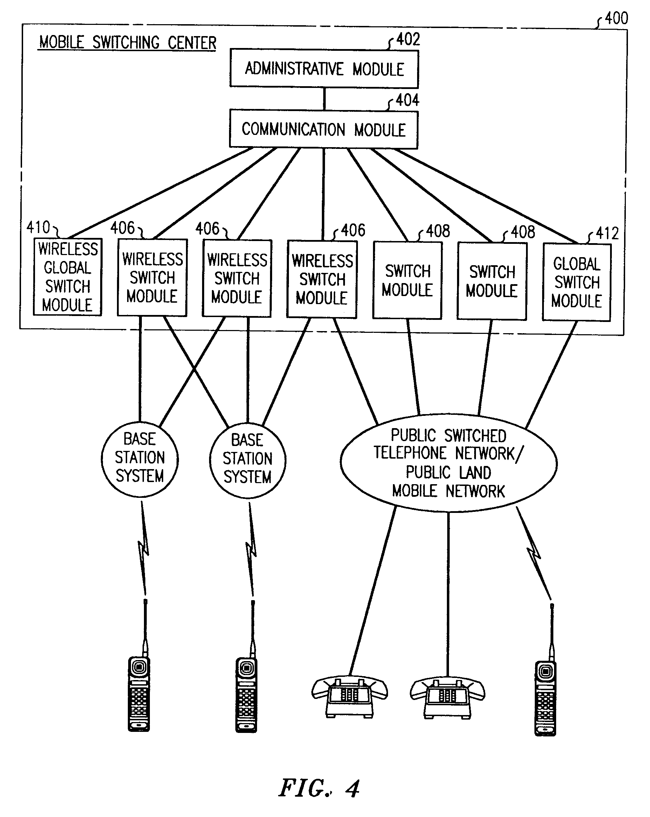

FIG. 4 is a basic block diagram of a mobile switching center 400 (switch), as implemented using AT&T's 5ESS® Switch. The switch, described in detail in The AT&T Technical Journal, vol. 64, no. 6, part 2, July/August 1985, pages 1305-1564, (Journal) includes an administrative module 402, a communication module 404, and a group of switching modules 406-412. The switching modules applicable in the GSM network are of four types; a wireless switching module (WSM) 406 for communicating with BSSs, and also optionally communicating with the public switched telephone network (PSTN); switching modules (SM) 408 for communicating with the PSTN; a wireless global switch module (WGSM) 410 for serving the signaling communication needs for controlling calls involving mobile stations; and a PSTN Global Switch Module (PSTN GSM) 412 used if PSTN trunks are of ISUP or TUP types, i.e., use SS7 for signaling to the PSTN. The PSTN GSM processes ISUP or TUP protocols and can optionally also be connected to PSTN trunks.

The functions of the administrative module (AM), communications module (CM) and switching module (SM), in relation to the PSTN are essentially as described in the referenced Journal. The purpose of the WGSM, as described hereinafter, is to simplify the signaling communications between BSSs and the WSM serving calls for the BSS, and between the MS and the WSM. The PSTN GSM is for controlling common channel signaling between the MSC and the PSTN. The PSTN GSM is connected by message delivery paths to protocol handlers in the SMs.

The signaling architecture of the mobile switching center is significantly simplified by having signaling messages go through a common set of data switches and protocol handlers in a wireless global switching module (WGSM). Physically, the wireless global switching module is connected via nailed up channels (message delivery paths) switched through the time multiplexed switch of the communications module to each of the wireless switching modules. These are 64 kilobit channels, the same as the PCM voice channels of the 5ESS switch communications module. Over another nailed up physical channel connecting the WGSM with a WSM messages are sent for a BSS via virtual channels in that physical channel; other virtual channels of that physical channel carry messages that originate from or are destined for the mobile stations.

The wireless switching modules (WSM) are combined packet and circuit switching modules each comprising a switching module processor (SMP), a packet switching unit (PSU) comprising a plurality of protocol handlers interconnected by a local area network, and circuit switching arrangements including a digital facility interface (DFI) and a time slot interchange unit (TSIU). The TSIU is connected to a time multiplexed switch of the communications module for interconnecting the switching modules. Switching modules comprising a packet switching unit are disclosed in M. W. Beckner et al.: U.S. Patent 4,592,048.

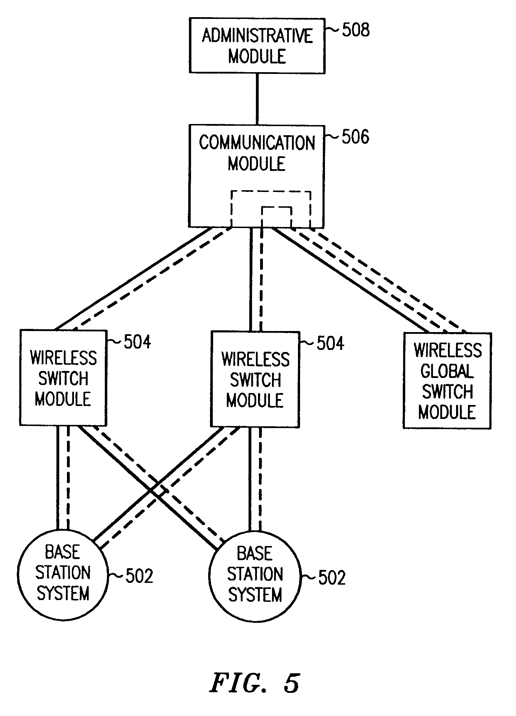

The signaling paths between the BSS, WSM, and the wireless global switching module (WGSM) are as follows. Each base station is connected by digital carrier facilities to two or more of the wireless switch modules 504 (FIG. 5). Many of these digital facilities include one or more signaling channels, the signaling channels from each BSS being connected to at least two WSMs. The signaling channel is connected via the digital interface of this wireless switch module 504 into the TSIU of the wireless switch module and is thereby connected through the communication module 506 and to a protocol handler (PH) in the wireless global switch module. The wireless global switch module protocol handlers are interconnected via a local area network in the packet switch unit of the WGSM.

The portion of the signaling path between the WGSM and a destination wireless switch module is as follows. The WGSM has at least one protocol handler with a port for transmitting messages to and receiving messages from a specific wireless switch module. This port is connected to a message delivery path that passes via a nailed up connection through a time multiplexed switch of the communications module. Each such message delivery path is a 64 kilobit data link and is connected to a port of a protocol handler at each end. In case of a failure of a protocol handler at either end, spare protocol handlers can be used to replace the failed protocol handlers. The protocol handler in the wireless switch module communicates on its local area network side via a packet interface with a switching module processor of the WSM. This switching module processor performs call processing and generates or processes, for example, the BSSAP portion of a message between a WSM and a BSS. The message delivery paths and the physical signaling data links interconnecting a BSS and a wireless switch module carry a plurality of virtual data paths, usually, temporary virtual data paths (SCCP connections) associated either with a mobile call or a mobile service such as a location update.

These signaling arrangements have a number of advantages. By having at least two signaling data links between each base station and at least two wireless switch modules, redundancy is gained and operation can continue even if either of the signaling channels (including the protocol handlers at each end of a signaling channel) or a WSM fails. The use of a single wireless global switch module with inherent sparing of protocol handlers concentrates the translation information required to select a destination wireless switch module when, for example, VLR data for a particular customer, as identified by that customer's International Mobile Subscriber Identification (IMSI) is required. Failure of one or more of the protocol handlers in the WGSM can be overcome by replacing a failed protocol handler with a working spare and by properly initializing that protocol handler to take over the functions of a failed protocol handler. Local reference numbers, discussed hereinafter are used to identify SCCP connections. As described hereinafter, because key information is stored in the local reference numbers, and because duplicate records are maintained on all stable SCCP connections through protocol handlers of the WGSM, none of these connections are lost even though they may have been served by a failed protocol handler.

The WGSM has at least one spare protocol handler per shelf of a PSU. In the event of a failure of any protocol handler, a spare takes its place. If no redundant data were available, then in the event of a simplex failure in a protocol handler the dynamic data regarding SCCP connections would be lost and consequently all BSSAP calls switched through that protocol handler would be lost. Redundancy of this data is added to the software architecture to ensure the integrity of this connection data.

When a connection is set up between a mobile switching center and a BSS, a local connection identifier is associated with each distinct connection. In order to keep each instance of the connection coordinated between the MSC and the BSS, this connection information is shared through the use of SCCP local reference numbers. According to the CCITT SS7 protocol, each end will send its local reference number and the far end's local reference number when first confirming the setup of a valid connection. Subsequent dialog requires the sending of the far end's local reference number. The value of this local reference number is not constricted by standards. When a connection is first initiated in the mobile switching center, the local reference number is encoded to include a connection identifier and the number of the protocol handler on which the connection resides.

The MTP layer provides for load sharing on a data link, changeover and changeback, with the possible result that incoming messages for a connection may arrive on a different physical link than messages being sent. When this occurs, the SCCP message arriving in a different protocol handler is routed to the proper protocol handler by decoding the local reference number since that quantity contains the identification of the protocol handler (PH) upon which the connection resides.

Whenever a SCCP connection goes into an active (stable) state, this connection information is shared with the next ascending PH in the PSU community (wherein the first PH is the "next ascending" PH for the last PH). This "next ascending" PH is known as a "backup PH." When a PH fails, a spare PH is switched into its position and thereby connected to the sources and destinations of messages for that PH. The "next ascending" PH transmits to the spare PH a list of reference numbers of stable connections from the failed PH; the "next ascending" PH will continue to control these connections as long as they are active. The spare PH assigns local reference numbers for new connections that have the same logical PH number as the connections formerly served by the failed PH. When the spare PH receives a message for an active connection, it first checks to see whether the reference number is one of a connection controlled by the "next ascending" PH. If so, the spare PH transmits that message to the "next ascending" PH which has the information for processing that message, and which therefore can maintain the virtual connection. In this way in the event that a PH fails, messages received on existing SCCP connections for the failed PH are automatically routed to the "next ascending" or backup PH. When a PH fails, the backup PH will automatically restart timers associated with the SCCP connections from this backup information. In this way, stable connections will remain stable as will calls dependent on those connections. Every PH, that sets up SCCP connections, has a dedicated backup PH. Since a spare PH then assumes the logical role and name of the failed PH and accepts new SCCP message connection requests for that PH, this will gradually reduce the temporary overload on the backup PH. When the failed PH is eventually restored to service, it then takes the role of a spare PH.

While in this embodiment, the "next ascending" PH is used as a backup, any other predetermined backup arrangement, such as the "next ascending skipping 1" (in a system with an even number of active PHs) could be used instead. The term "predetermined adjacent" is used to describe any predetermined backup PH selection.

As discussed above, when the spare PH assumes the role of the failed PH, the backup PH will report the present status of all its active connections to the spare PH. The spare PH will not reuse resources, such as connection identifier numbers, for active connections still running on the backup PH when setting up new SCCP connections. The backup PH will then continue to service all presently active connections until they are released, as well as servicing new SCCP connections for itself.

When a mobile station is first powered up within a specified mobile network, the international mobile subscriber identification (IMSI) is used by the mobile station to identify itself. This IMSI is used to route a request for VLR data to the WSM that contains that data. Each protocol handler of the WGSM contains a table that determines the identity of the WSM that stores the VLR records, based on the IMSI. During the location update or registration process, the SM that stores the VLR data will associate a Temporary Mobile Subscriber Identification (TMSI) with a mobile station. The TMSI, whose value, while at least in part random, is not otherwise constricted according to the GSM standard, is specially encoded with the identity of the WSM (i.e., a switching module having wireless software) that contains the VLR so that accessing the proper WSM for incoming messages when VLR data is required is simplified if the TMSI is available. Randomness of the TMSI is maintained by randomizing one of its four octets. Except on initial mobile station power up, as described above, the TMSI will normally be used for all BSSAP transactions. When a mobile station initiates a transaction (such as a call or location update), the SCCP connection data base that stores information about the transaction, also stores information to identify the WSM that contains VLR data as well as the WSM that contains the trunk connected to the BSS. This is used for the routing of all subsequent messages for this connection, which contain no TMSI.

As an example of the operation of the signaling system, consider a data connection between a BSS and a mobile switching center. Assume that the connection is initiated in the BSS. An initial message would first be transported by MTP in the BSS from the BSS over a signaling data link logically interconnecting the BSS and a WGSM. The protocol handler, in the wireless global switch module, which terminates the signaling data link passes the message from MTP to a SCCP control program. This SCCP program strips off the MTP header and parses the message. Depending on the contents of the message, a connection is established or released, or the transfer of data is required. In this example, connection establishment is requested and a SCCP connection (i.e., a virtual circuit) is temporarily set up between the protocol handler in the WGSM end of the signaling data link and the protocol handler in the BSS. The SCCP control program informs a base station system application part (BSSAP) (also referred to as a radio subsystem application part in FIG. 3) of the request for a connection establishment via a primitive interface. BSSAP then parses the BSSAP message and obtains the identity of the destination wireless switch module. In the case, for example, of a query requiring VLR data, this destination WSM is identified by the international mobile subscriber identity (IMSI) field contained in the BSSAP message. The BSSAP control process uses the IMSI to index a look-up table to find the WSM where the VLR data base for this IMSI is to be found. The message is then sent within the WGSM from the protocol handler terminating the signaling data link to a protocol handler that terminates a message delivery path to the identified WSM. This protocol handler then sends the message to a protocol handler on the destination WSM which in turn forwards the message to the switching module processor of that WSM. A BSSAP control process in the destination WSM then further parses the message and passes it on to a call processing program for processing a mobile call or service.

Another example of the signaling procedures carried out in this embodiment of the invention is the procedure for sending a message from a wireless switch module to a BSS via an established connection. In the transmitting wireless switch module, a BSSAP process assembles a BSSAP layer of the message that is tagged with the local reference number identifying the SCCP connection. This process then forwards the message to a protocol handler in the source wireless switch module, which then transmits the message over a nailed up message delivery path going through the communications module to a first protocol handler in the wireless global switch module. This first protocol handler examines the local reference number of the message and uses this to determine the second protocol handler that terminates the SCCP connection. (This local reference number was previously derived during the process of establishing the SCCP connection.) This protocol handler then uses a SCCP process to encapsulate the message with a SCCP header and passes the message to a message transport part (MTP) process for adding the MTP headers. The message is then sent over the (logical) data link to the BSS. (The physical data link corresponding to this logical data link has been described earlier.)

Advantageously, this type of arrangement permits essentially all of the SS7 protocol handling functions to be carried out in the packet switching unit of the WGSM (without involving the switching module processor of the WGSM) and allows the transmitting and receiving WSMs to process their messages independent of the destination. Effectively, the set of protocol handlers of the packet switch unit of the WGSM acts as the handler of all signaling protocols. (A maximally equipped WGSM contains 75 active and 5 spare protocol handlers.) The WGSM assembles and disassembles the Signaling System 7 headers to the application data of the messages and switches the messages for transmission to the proper WSM which may either accept the messages (if the destination is the mobile switching center) or originates messages to the appropriate BSS (if the destination is either a BSS or a mobile station).

In addition, the MSC communicates from the administrative module with an external service center 224, using the X.25 protocol for delivery of short messages, such as an indication of a voice message waiting. The MSC communicates with the public switched telephone network using a land-based signaling system such as SS7.

The switching modules also communicate messages via the message switch of the communication module as is done in a land-based 5ESS switch. Call processing messages, such as the messages that are exchanged in order to set up a connection through the communications module between, for example, a switching module connected to the public switched telephone network portion of a land-to-mobile or mobile-to-land call and the wireless switching module that is connected via the BSS to the mobile station end of the call, are sent in this way.

In this arrangement, whenever an MS is in the region served by an MSC, the base VLR is stored in the memory of that MSC. If a call is started when the MS is served by a first MSC, and the MS moves to an area served by a second MSC, the base VLR will continue to be stored in the first MSC until the call is disconnected.

When the mobile station is either in the power-off state or in the power-on state but not in any active call state, only a base version of the VLR is maintained for that mobile station in the VLR WSM. When a call is originated by a mobile station or a call is received for that mobile station, a separate dynamic version of part of the VLR is stored and maintained in the WSM that controls the mobile calls. This copy of the VLR is linked to the terminal process in that WSM that controls the mobile station end of the call. If the mobile station moves and the call is handed over to a different switching module, then the dynamic copy of the VLR is transferred to the new WSM serving the mobile station for that call and is linked to a terminal process for serving that call in that WSM. Note that the data in the base VLR that is not relevant to the MS locations is changed only when requested by the HLR or such customer programming actions as the specification of a call forwarding number and are not copied into the dynamic VLR. When necessary, the system administrator modifies the HLR which in turn updates the base VLR; the administrator has "read only" access to the base VLR for trouble shooting purposes.

The location of the mobile station is not updated in either the dynamic or the base VLR during a call, and is updated in the base VLR only as part of a location update procedure. Location update procedures are carried out when the mobile station is idle with power on, and moves from one location area to another. A location area is the area that is paged when a call terminating to an MS is received.

All incoming calls first check the HLR. This is because the HLR is fixed and the location of the HLR record is tied to the called number (directory number) of a mobile station. The HLR has stored within it the information necessary to find the base VLR; this information includes an identification of the mobile switching center that contains the base VLR. All administrative changes of data associated with a mobile station are entered first into the HLR which then sends messages for entering the corresponding change in the base VLR. Customer initiated changes such as the prescription of a different call forwarding number are forwarded initially to the base VLR which does not initially make any change in its record but forwards the request to the HLR which makes the necessary change and generates a message for updating the base VLR. The HLR is accessible via the mobile station directory number or the International Mobile Subscriber Identification (IMSI). The VLR is accessible via the IMSI or the TMSI; the HLR can also access the VLR by a special ISDN address. ISDN addresses are maintained for VLRs, HLRs, MSCs, and EIRs according to the GSM specification.

The HLR and VLR are stored in the wireless switching modules of the MSC. Each switching module stores records for a range of mobile directory numbers and each module has a range translation to select a module based on the directory number. Since the HLR must also be accessible via the IMSI from other network entities, a table is stored in each protocol handler of the GSM to identify the module that has stored the HLR for each IMSI served by the MSC. Each switching module also stores records for a range of VLRs. Since the VLR must be accessible via the IMSI from the MS, a table is stored in each protocol handler of the WGSM to identify the module that has stored the VLR for each IMSI served by the MSC. No translation is required for access via the TMSI since that contains a subfield for identifying the switching modules containing the VLR/HLR.

FIG. 5 is a block diagram illustrating the physical signaling paths between base stations and wireless switching modules. The base stations 502 are connected through permanent virtual circuits which physically pass through a WSM 504 serving the base station and through the communications module 506 to a protocol handler in the WGSM 508. The protocol handler receives messages in the SS7 protocol used to communicate with the base station and transmits the message to the correct WSM; the digital facility interface connected to the BSS transmits the messages to a protocol handler of the WGSM which is connected by a switchable physical nailed up data channel to the destination WSM, where it terminates on a protocol handler which is connected to the switching module processor of the WSM. Advantageously, the WGSM terminates a standard protocol and allows any WSM to control any calls from the base stations that have trunks to the WSM, since the processor of the switching module (SMP) for controlling the call need not be the SMP for controlling a specific connection between a BSS trunk and a channel to a CM or to another output of the WSM.

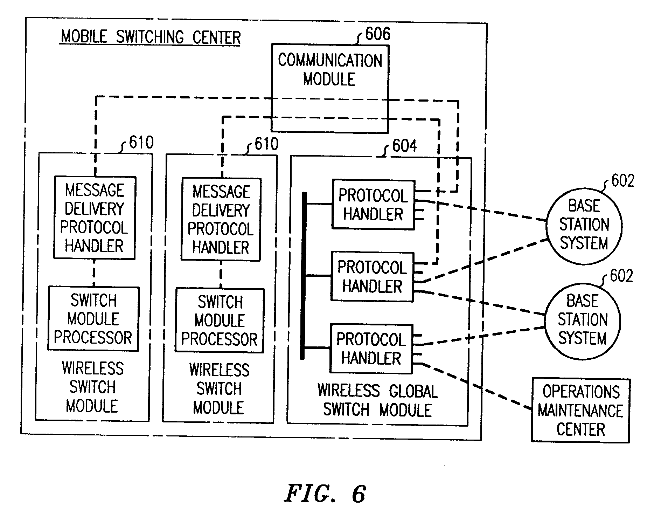

FIG. 6 shows the logical signaling system. The base station system 602 communicates with the WGSM 604 which then delivers its message via the communications module 506 to the appropriate WSM 610.

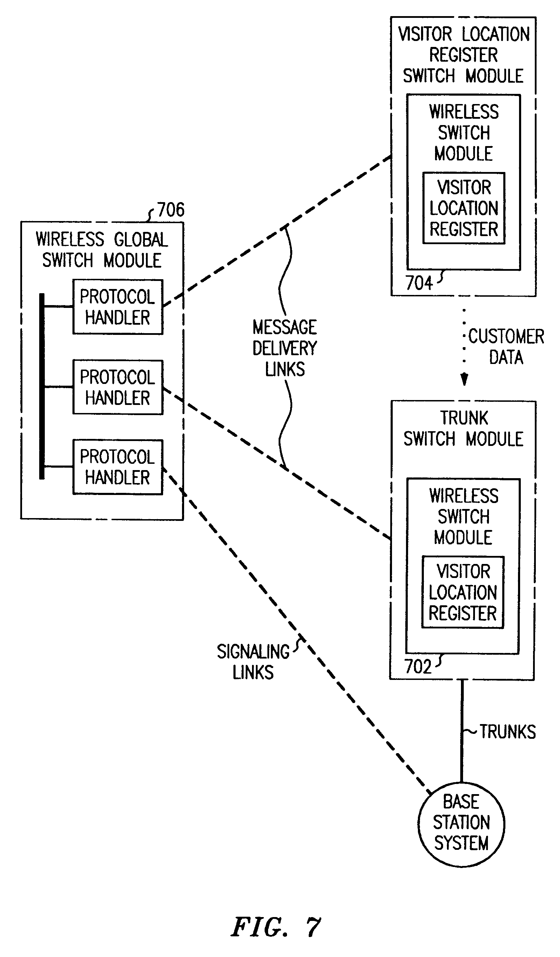

As shown in FIG. 7, the VLR data for a particular mobile switching center is spread out over the WSMs 702,..., 704 in that center. In the particular example, when WSM 702 needs VLR information from WSM 704, it requests the information via the call processing inter-module data links switched through the message switch of the communications modules of the 5ESS switch.

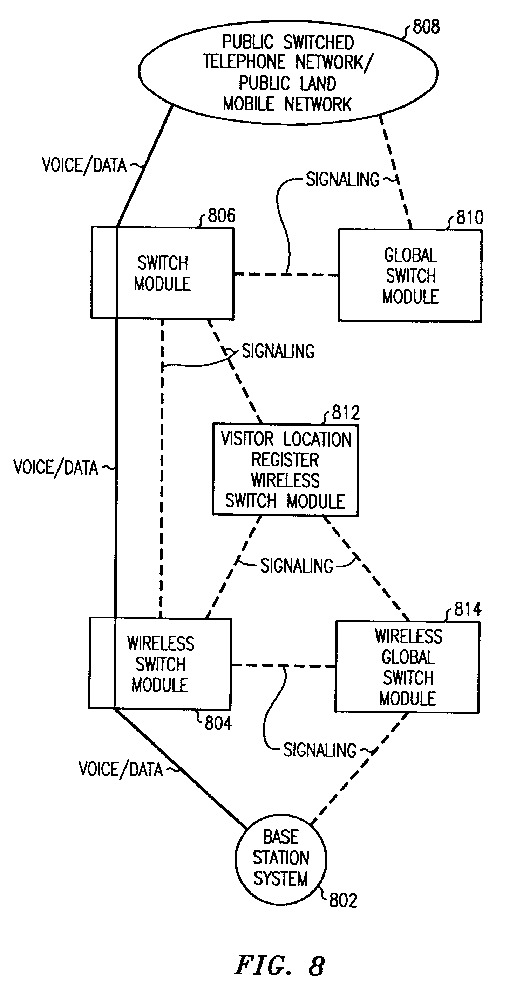

FIG. 8 illustrates the modules involved in a mobile-to-land call. The base station system 802 nearest the mobile is connected by a voice path to a wireless switching module (WSM) 804 which is connectable through the communication module (CM) to another switching module for connection via the public switched telephone network (PSTN) 808 to the called customer. The PSTN global switching module (GSM) 810 is used for controlling SS7 signaling to the public switched telephone network. The WSM 812 that contains the base VLR data is connected via virtual data links to the WSM 804 controlling the mobile station leg of the call. The SM 806 and WSM 804 are connected by a virtual data link in order to coordinate the activities of the terminal process handling the call in each of these modules. The WGSM 814 communicates all data to and from the BSS and transmits it as necessary to either the WSM 804 or the VLR-WSM 812.

Consistent with the principles of operation of the 5ESS switch for land-based calls, the administrative module 508 (FIG. 5) is used for selecting outgoing PSTN trunks on mobile originated calls and for selecting time slots for voice paths between switching modules. In addition, the administrative module is used for selecting a trunk between the mobile switching center and a base station controller. The base station controller selects a path between the incoming trunk to the base station controller and the base transceiver station. As previously indicated, this path may be a land-based trunk. The trunks between the BSSs and the mobile switching center are one way outgoing from the mobile switching center. This makes the finding of an idle trunk from the centralized administrative module efficient and allows the trunks to be fully utilized: whether the call is originated by a mobile station or is terminated to a mobile station, the trunk will be hunted for and allocated by the administrative module which is a part of the mobile switching center.

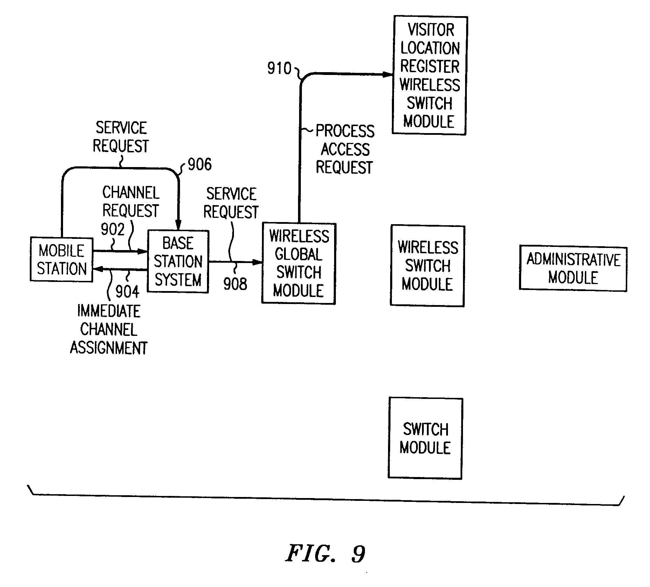

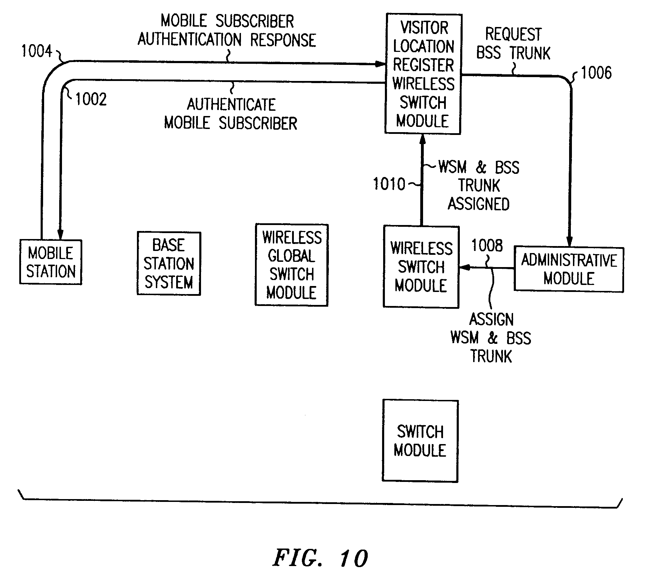

FIGS. 9-13 illustrate the messages required in processing a mobile-to-land call and shows the source and destination of each message. The call is initiated by a control channel request message 902 (FIG. 9) from the MS to the BSS to request the assignment of a dedicated control channel for further signaling from the MS. The BSS responds with a control channel assignment message 904 to allow the MS to access the proper control channel. The MS then transmits a service request message 906 to the BSS which passes this service request message 908 to the WGSM. The WGSM transmits a process access request message 910 to the WSM that contains the VLR information. The WGSM has the data for determining which WSM contains the VLR information for this mobile station. This data is used when the TMSI is not available. If the TMSI is available, it has the VLR-WSM ID encoded in it for easy identification of the VLR-WSM. The message from the WGSM to the VLR-WSM is for processing the service request and for creating the connection data in the VLR-WSM for the request. The VLR-WSM enters a tuple in the connection data block for the process that handles the request. The data includes the identification of the connection transaction using the connection. An authentication process, if needed, is initiated by the VLR-WSM, which transmits a message 1002 (FIG. 10) to the mobile station (the message is actually transmitted via the WGSM, the WSM connected to the BSS, and the BSS) to request authentication algorithm calculation. The mobile station responds to the VLR-WSM with a message 1004 containing the result of the authentication algorithm calculation.

Meanwhile, the VLR-WSM transmits a message 1006 to the administrative module (AM) requesting the assignment of a BSS trunk for the call and the AM transmits a message 1008 to the WSM connected to that trunk for creating a wireless originating terminal process in that WSM for handling the call. The WSM then returns a message 1010 to the VLR-WSM for notifying the VLR-WSM which trunk WSM (i.e., WSM connected to the trunk to the BSS serving the call) and BSS trunk has been assigned to the call. As will be seen below, the VLR-WSM is required for controlling the ciphering information for the call.

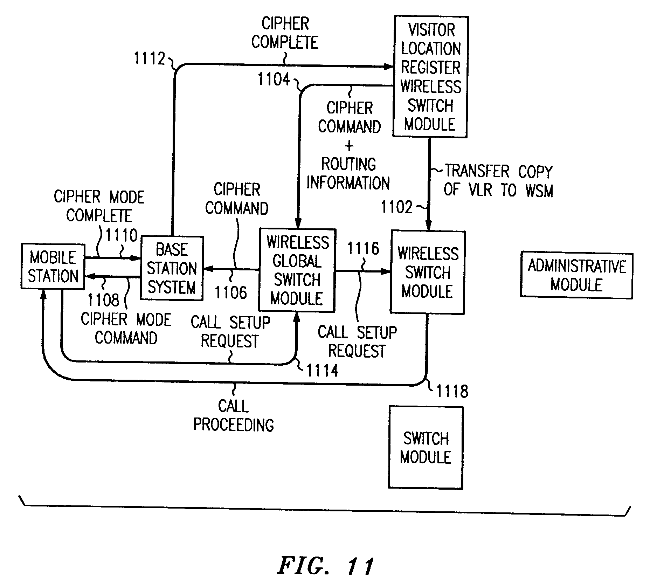

The VLR-WSM transfers (message 1102, FIG. 11) to the WSM for handling the call, a copy of the call processing related information, relating to the mobile station from the VLR record to the call controlling WSM. If ciphering is used, the VLR-WSM transfers the cipher command to the BSS via the WGSM (messages 1104 and 1106). The BSS transmits a cipher mode command (message 1108) to the mobile station. The mobile station then sets up the cipher mode and transmits back to the BSS, a cipher mode completed message 1110. The BSS sends a message (via the WGSM) to the VLR-WSM that the cipher process has been completed 1112. At this time, both the BSS and the mobile station are in a corresponding cipher mode. The details of the encipherment are specified in the GSM standard.

The mobile station then sends a setup request message (1114 and 1116) via the WGSM to the call controlling WSM (i.e., the WSM that contains the terminal process for the mobile station). The WGSM had previously been informed of the identity of the WSM in message 1104. The WGSM checks to ensure that no failures have been encountered up to this time before call setup request. If any failures have occurred, the failures are reported to the WSM. The WSM then transmits a message 1118 to the mobile station indicating that the call is proceeding.

Next, if the equipment validation function is needed, the VLR-WSM in cooperation with the call controlling WSM and the mobile station performs that function. (Equipment validation is optional in GSM according to the wishes of the telecommunications operator.) The VLR-WSM requests (message 1202) the mobile station to furnish its International Mobile Equipment Identification (IMEI). If the EIR data base is not in this WSM or in this MSC, the VLR-WSM sends a MAP message to access the EIR. The mobile station responds with its IMEI (message 1204) to the VLR-WSM which checks to insure that the mobile station is authorized to use the network. The VLR-WSM sends the result of its check (message 1206) to the call controlling WSM. Meanwhile the trunk WSM notifies the BSS of the identity of the previously assigned BSS trunk (message 1208). The WSM also requests that the BSS pick a radio channel for the voice (or data) communication with the mobile station. This radio channel will then be associated with the assigned BSS trunk for the length of the call or until the call is handed over to another BSS or terminated. The BSS assigns the radio channel and notifies the mobile station of the assignment (message 1210). The mobile station responds (message 1212) when it has received this assignment and has tuned its radio to that channel. The BSS then reports back to the WSM that the radio channel assignment process and the radio to trunk connection have been completed (message 1214). The WSM requests (message 1216) the administrative module to hunt for a trunk to the public switched telephone network for completing the land part of the call and the administrative module assigns this trunk and requests the switching module connected to that trunk to create a terminal process for the call (message 1218). The switching module then transmits a message 1220 to the WSM that the network connection is proceeding and transmits a message 1222 to the PSTN GSM which transmits message 1224 to the public switched telephone network to set up the call. (This is a TUP or ISUP message depending on the type of trunk signaling used to access the next switching system of the PSTN.)

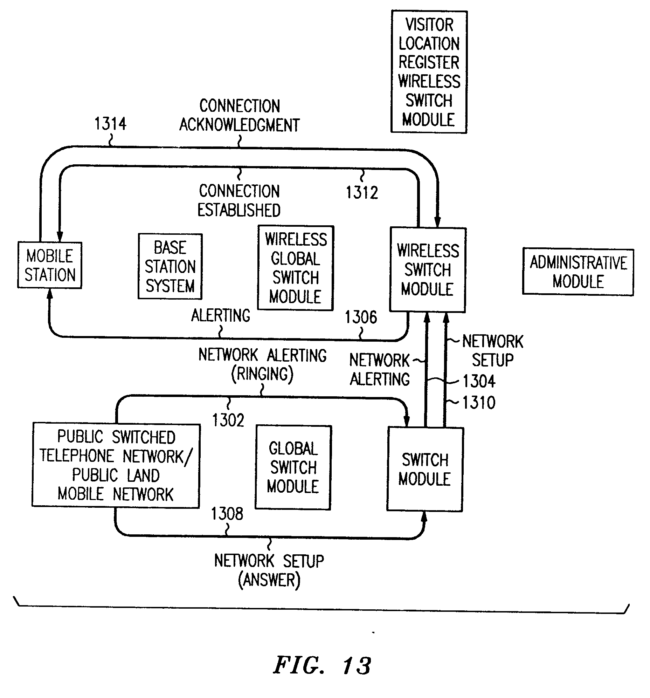

The public switched telephone network then responds to the SM with a message 1302 (FIG. 13) indicating that the called customer is being alerted and the SM transmits a message 1304 to the WSM which sends a message 1306 to the mobile station to connect alerting tone. (This is supplied locally within the mobile station.)

Sometime later, the public switched telephone network sends message 1308 to the SM that the called customer has answered. The SM sends a message 1310 to the call control WSM to indicate that an end-to-end talking path has been established. The call control WSM so informs the mobile station (message 1312). The mobile station responds with an acknowledgment (message 1314) and the call is now active.

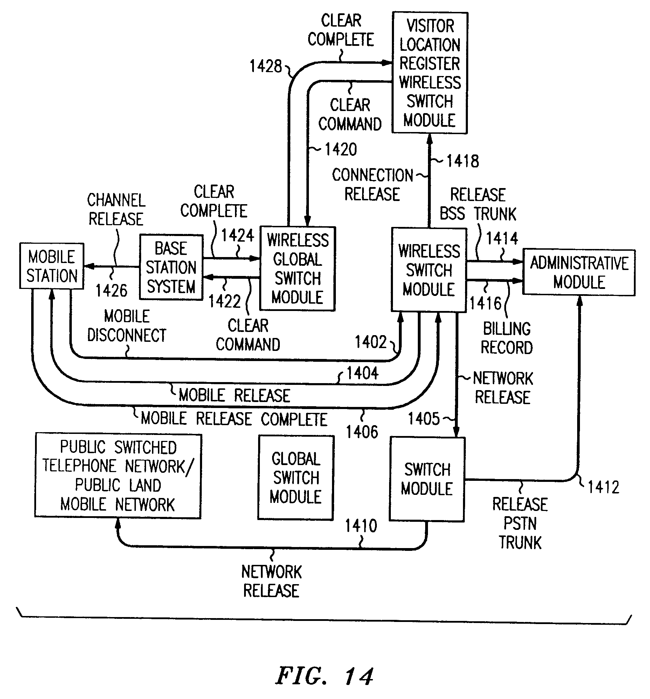

Next, the disconnect process will be discussed (FIG. 14). It will be assumed that the mobile disconnects first. The mobile sends a disconnect message 1402 to the WSM whose terminal process is controlling the mobile end of the call and the WSM transmits a release message 1404 to the mobile and a network release request 1405 to the SM connected to the public switched telephone network. The mobile then transmits a release complete message 1406 to the WSM. The SM releases the call and transmits a network release message 1410 to the public switched telephone network. The SM also transnuts a message 1412 to the administrative module to release the trunk to the PSTN and the WSM sends messages 1414 to administrative module for releasing the BSS trunk and 1416 for storing the billing record of the call if necessary. (Several billing records are sent in one message so that not every call generates a billing message from an SM to the AM.) The WSM also sends a release message 1418 to the VLR-WSM to update the status of the mobile station of the call. The VLR-WSM sends a clear command 1420 to the WGSM for clearing the connection information for messages if the call is the last transaction for the mobile station. (If other transactions, such as the delivery of a message waiting signal message, are required, the connection is kept up; the VLR remains involved in call control, but not the WSM attached to the BSS for controlling the call.) The WGSM sends a clear command to the BSS to release the radio channel and receives an acknowledgment 1424 from the BSS that the radio channel has been released. The BSS sends a clear command 1426 to the mobile station to release the transmitting channel. The WGSM then sends a clear complete message 1428 to the VLR-WSM to confirm that the mobile station is now released.

The handover procedure will now be described. Since a mobile station may travel during the course of a call, it could easily get outside the effective range of the base transceiver stations of one BSS and into the effective range of another. Under these circumstances, it is important that the mobile station be retuned to a frequency of a transceiver of the second BSS and that the call be continued via that transceiver. The process will first be described in terms of the connections, then in terms of the message exchanges.

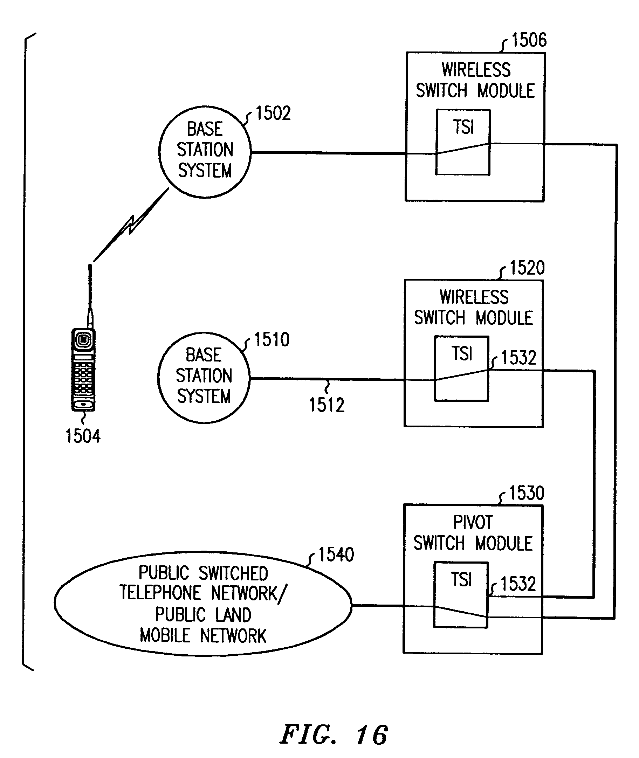

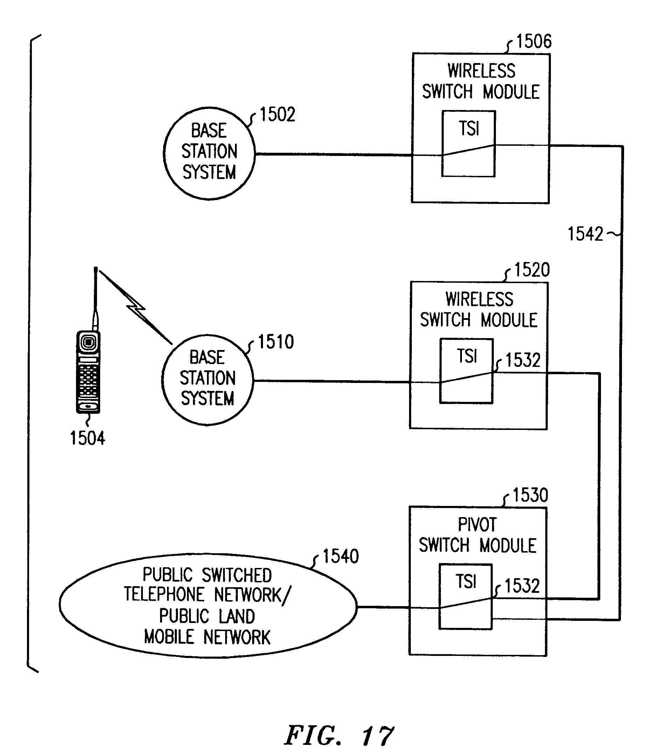

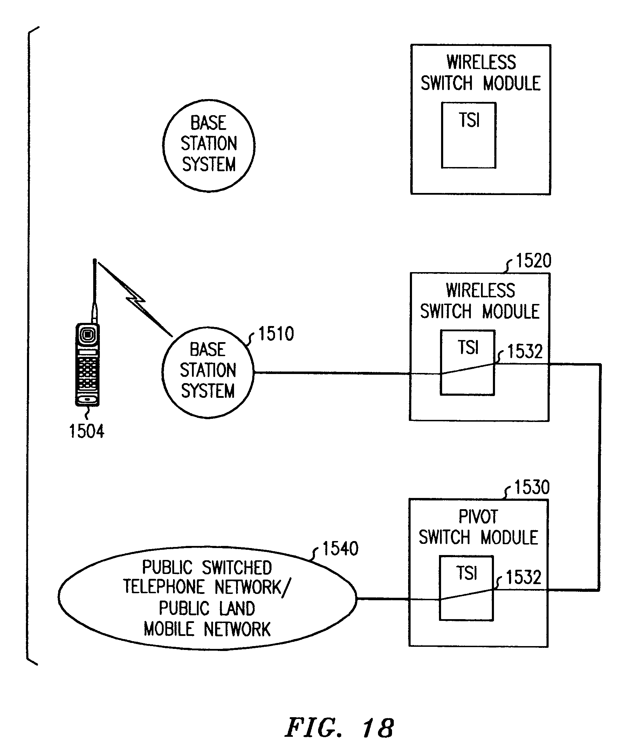

FIGS. 15-18 illustrate the process of a handover to a base transceiver station in another BSS served by the same MSC (intra-MSC handover). The request is originally made from the BSS 1502 serving the call in response to a message from the mobile station 1504 reporting the signal strengths of the serving base transceiver station and nearby candidate base transceiver stations. At this time the call is served from BSS 1502 and wireless switching module 1506. The wireless switch module 1506 selects a new base transceiver station which is, in this example, on a new BSS 1510. The administrative module selects a trunk 1512 (FIG. 16) between wireless switching module 1520 and BSS 1510. The administrative module also selects a network time slot 1532 between the switching module 1530 (the pivot module) connected to the land-based station via the public switched telephone network 1540 and the wireless switching module 1520. BSS 1502 then sends a message to the mobile station to retune to the transceiver system of BSS 1510. At the completion of retune (FIG. 17), the connection through the time slot interchange in the pivot module is switched to the connection 1532 to wireless switch module 1520. At this point, the land-based station is connected through the public switched telephone network 1540, through pivot switch module 1530, and through WSM 1520 and BSS 1510 to the mobile station 1504. Finally, the old resources, namely the connection 1542 between the pivot module 1530 and WSM 1506 as well as the connection between WSM 1506 and BSS 1502 are released as are the radio resources for the call in BSS 1502 (FIG. 18).

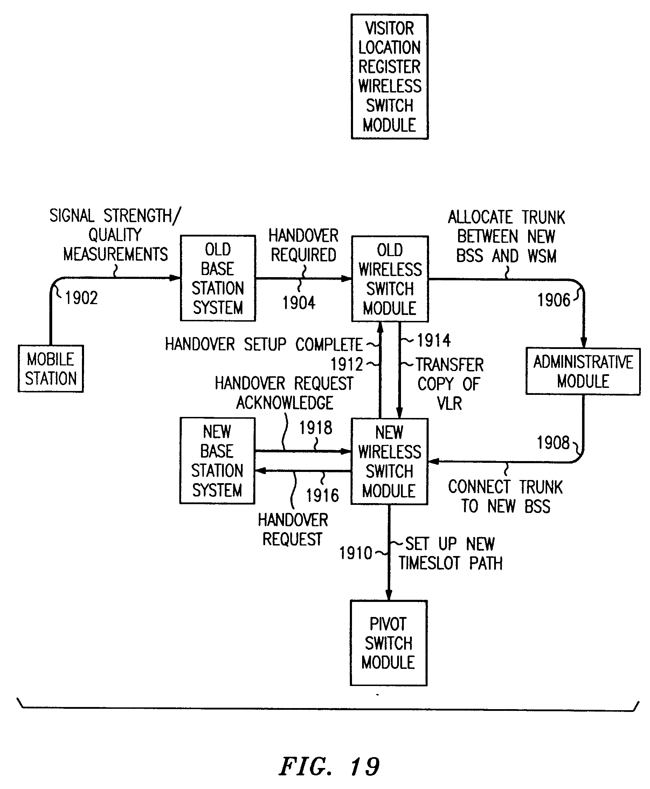

The intra-MSC handover process will now be described (FIGS. 19-21) in terms of the appropriate message exchanges. According to the standards discussed previously, a mobile station performs the task of measuring the strength of signals received from different BSSs in its vicinity. The mobile station periodically sends the measurements message 1902 (FIG. 19) to the base station currently serving that station. If the BSS detects that the signal from the BSS currently serving that mobile station is below the threshold of signal strength required for reliable communications, the BSS sends a message 1904 to the WGSM of the mobile switching center including an ordered set of candidate base transceiver stations for handling the call further. The WGSM delivers the message 1904 to the WSM currently handling the call (the old WSM), indicating that a handover is required and passing the list of candidate base transceiver stations. The old WSM after consulting the terminal process for the mobile station to determine that handover may proceed, passes this information via message 1906 to the administrative module for the allocation of a trunk to the first candidate BSS. The administrative module transmits a message 1908 to the WSM connected to the selected trunk of the BSS (the new WSM) and the new WSM transmits a message 1910 to the switching module connected to the land path (the pivot SM) to set up a second time slot path for use with the new connection from the public switched telephone network to the new WSM, and to inform the pivot SM of the new WSM and new terminal process identity. The new WSM sends a message 1912 to the old WSM indicating that the new path setup is complete and the old WSM transfers the copy (message 1914) of the VLR information which it has stored associated with the terminal process for this call to the new WSM. The new WSM then sends a handover request message 1916 to the new BSS for assigning a channel in the new BSS, and the new BSS returns an acknowledgment 1918. The handover request acknowledgment includes the frequency and channel which the new BSS will use to communicate with the mobile station.

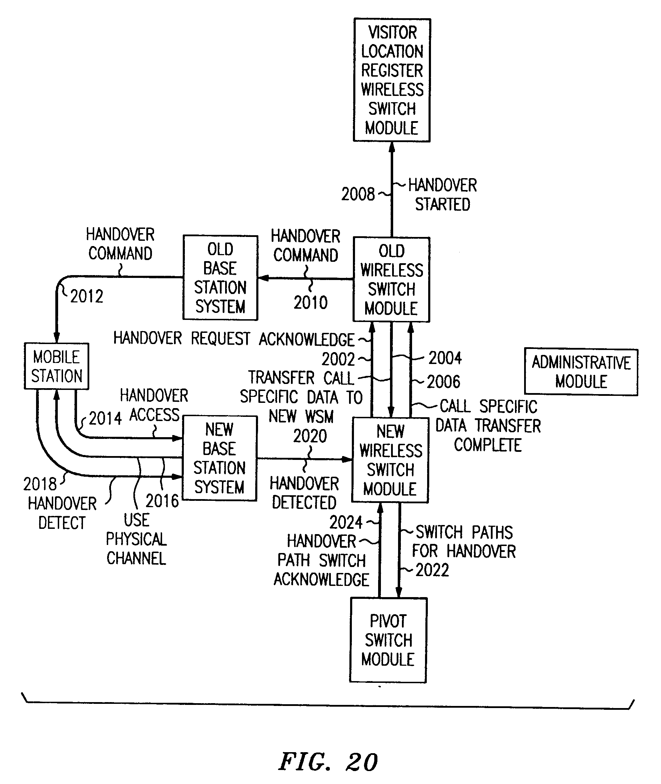

The new WSM sends to the old WSM a handover request acknowledgment 2002 (FIG. 20) which includes the identification of the new frequency and channel to which the mobile station is to be tuned. The old WSM transfers that call's specific data to the new WSM via message 2004 and defers processing of all messages to and from the MS that are being sent to the old WSM. Such messages will subsequently be forwarded to the new WSM. The new WSM returns a message 2006 indicating that the call's specific data transfer has been completed, and the old WSM transmits message 2008 to the VLR-WSM, indicating that the actual channel switching is about to start and requesting the VLR-WSM to defer the processing of new input signals. (Examples of new input signals whose processing is deferred during handover are short message delivery requests, e.g. a request to deliver a "turn on voice message waiting lamp" short message, or new calls to the mobile station.) The old WSM then transmits a handover command 2010 to the old BSS, which forwards that handover command 2012 to the mobile station. In response to this handover command, the mobile station tunes to the new assigned frequency and channel for communicating with the new BSS. The mobile station then transmits a handover access message 2014 to the new BSS which transmits a message ("use physical channel" message 2016) requesting the mobile station to establish frame synchronization with the base station physical channel. The mobile station transmits a handover detect message 2018, indicating that a physical layer connection has been established to the new BSS, and that the mobile station has retuned. The new BSS transmits a message 2020 to the new WSM that the handover has been detected, which, in response to that message, requests the pivot SM to switch to the new path (message 2022). The pivot SM switches to the new path and transmits an acknowledge message 2024 to the new WSM.

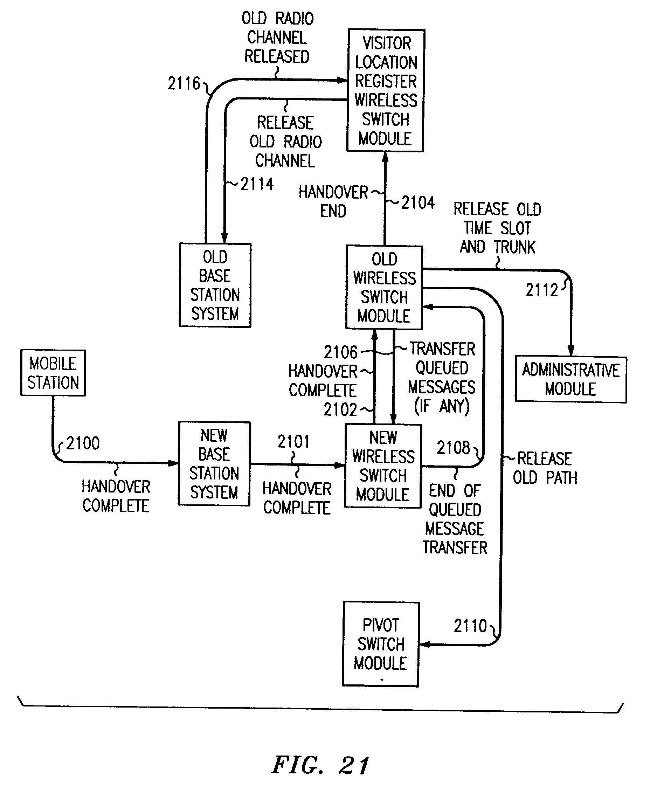

After the layer 3 protocol is established, the mobile station sends a handover completion in message 2100 (FIG. 21) to the new BSS which forwards the message 2101 to the new WSM. The new WSM then transmits to the old WSM a message 2102 (FIG. 21) that the handover has been completed and the old WSM transmits a message 2104 to the VLR-WSM that the handover has been completed; this message includes the identity of the new WSM. The old WSM transmits to the new WSM any queued messages 2106 for this mobile station and the new WSM acknowledges the end of this message transfer (message 2108). The old WSM transmits a message 2110 to inform the pivot SM to release the old path. The old WSM also transmits a message 2112 to the administrative module to release the old time slot. In the meantime, the VLR-WSM, in response to the receipt of the handover end message 2104, transmits message 2114 to the old BSS to release the old radio channel, and the old BSS releases this channel and transmits an acknowledgment 2116 to the VLR-WSM.

In the transitional stages, the new WSM is connected to the pivot SM but the path is not continued through the time slot interchanger of that SM for connection to the far party. This connection is made after the mobile station has tuned to the radio frequency of the new BSS, and is made at the same time as the old time-slot interchange connection for connecting the current WSM to the public switched telephone network, is dropped. Thus, only one connection is made through the SM connected to the far party and that connection is made through the time-slot interchange of that switching module. This permits a very rapid transition from one connection to another, since all other connections are made before the time-slot interchange connection is switched.

As long as a mobile switching center continues to serve a particular mobile station, the VLR for that mobile station is maintained in that mobile switching center and is retained in the same switching module of that mobile switching center even as the mobile moves to different areas served by that switching center. The procedures for handing over a mobile station from one mobile switching center to another are discussed with respect to FIGS. 29-38. Since the switching module which contains the call data for serving a call for a particular mobile station, retains the bulk of the information from the VLR, and further retains the identity of the switching module that contains the base copy of the VLR, there is no need to move that base copy even when a mobile moves and is subsequently served by a different wireless switching module.

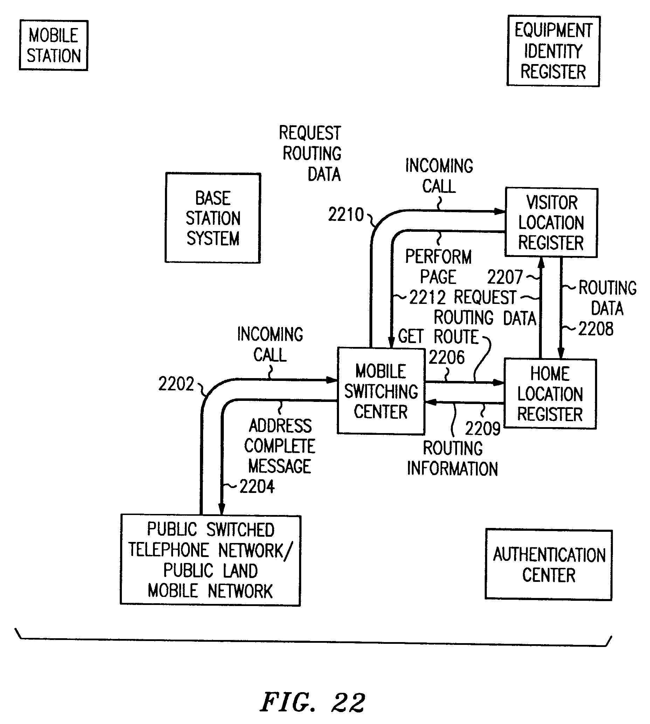

A land-to-mobile call will now be described. An incoming call message 2202 (FIG. 22) is received from the public switched telephone network at the mobile switching center. (Note that the land-to-mobile call could also originate in the mobile switching center if the MSC serves land-based lines.) For the case of SS7 signaling on the incoming side, the mobile switching center sends an address complete message 2204 to the public switched telephone network. The MSC which received the incoming call is the MSC that, on the basis of the telephone number, is the "home" for this mobile station. (The procedure for handling calls with base HLR information in another MSC is beyond the scope of this Detailed Description.) This MSC contains the base HLR information for the mobile unit.

The MSC consults the HLR for that mobile unit in the appropriate wireless switching module (action 2206) or in an external data base, and obtains information as to which MSC is currently serving the mobile unit (action 2209). The HLR knows the location of the VLR for the mobile station. The HLR will request a routing number from the VLR (message 2207). The VLR will assign a routing number and return it to the HLR (2208). The routing number (the Mobile Station Routing Number (MSRN)) is returned in message 2209 to the MSC. This is done regardless of the location of the VLR, HLR or mobile unit (i.e., if the mobile unit is being served by the MSC that happens to contain the VLR and HLR, an MSRN is still assigned). If the mobile unit is currently roaming and outside the range of the home MSC, the MSC reroutes the call to the MSC that serves the mobile unit. In this example, the mobile station is controlled by the home MSC. If the mobile station has requested that calls be forwarded to another number, this will also be reported to the MSC for further processing, either by the MSC if the call forwarding number is served by the home MSC, or for further processing by another MSC or the public switched telephone network, if the call forwarded number is not served by the home MSC.

In this case, assume that the mobile station has not requested call forwarding and is being served by the home MSC. The MSC determines the WSM which contains the VLR of the mobile station, which VLR is integrated in the MSC for this embodiment. The MSC queries that VLR (action 2210). The VLR determines the most recent location area of the mobile station, in order to have the mobile station paged by the BSSs in the most recent location area. The VLR responds with the identity of the location area for performing the page (action 2212).

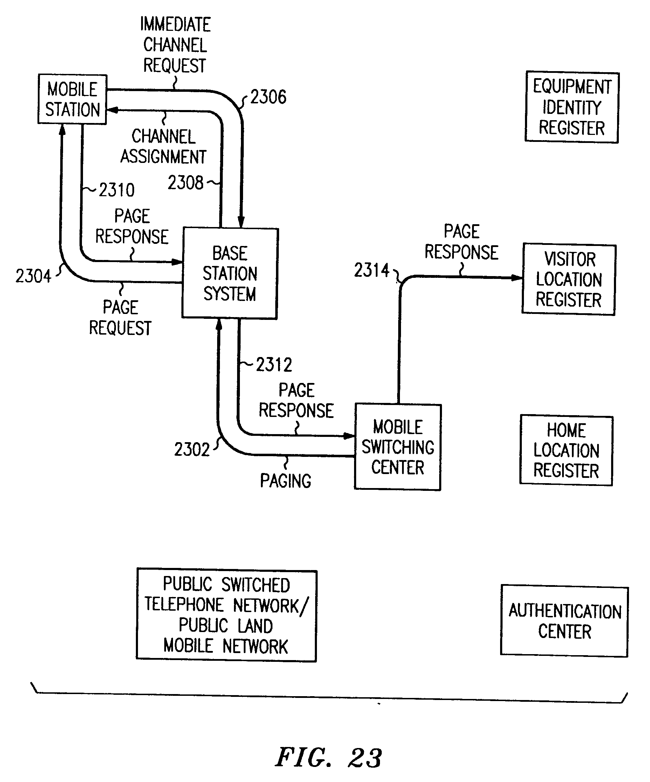

The MSC then sends a message 2302 (FIG. 23) to the BSSs serving the location area requesting the page. The BSSs send out paging signals (action 2304) and the mobile station responds to this request (action 2306) via one of the BSS, with a request to assign a control channel to this mobile station. That BSS transmits to the mobile station a channel assignment 2308 for the dedicated control channel to be used. The mobile station tunes to that control channel and delivers its page response 2310 over that control channel.

Under the principles of the GSM standard for mobile communications, a mobile unit is tuned to a single paging channel. If the mobile unit is turned on, it tunes to the paging channel of the base transceiver station with the strongest signal. This is done by taking signal strength measurements of the broadcast channels of several nearby base transceiver stations and selecting the system with the strongest signal. The mobile station then tunes to the common control channel, paging subchannel of that system. If a mobile unit has moved across location area boundaries while the mobile station is powered on but not in the connected state, then the mobile station will send a location update message to the MSC which updates the VLR for that mobile station. The mobile station recognizes this transition because its internal record of a location area differs from the location area signal received from the base transceiver station via the broadcast control channel.

When a mobile is originally paged, it is paged by all the transceiver stations in the location area where the MS has last registered. This paging message is transmitted from the protocol handlers of the wireless global switching module to all the appropriate base station controllers. Within the WGSM, a paging request message received from a switching module contains the location area identifier (LAI). This is translated to derive a series of point codes for the BSSs that contain Base Transceiver Stations which must broadcast the page. The PH that received the paging request message from the switching module broadcasts a message to the WGSM protocol handlers that also includes the identity of the mobile (the IMSI or TMSI as discussed hereinafter with respect to the authentication procedure), the point codes and a single logical route, effectively appended to each point code. The logical route is a four bit quantity used to spread the signaling traffic over the different signaling links to the BSSs. Each protocol handler examines the point codes and the logical route to see if it is involved (i.e., serves a signaling link that is used) in transmitting paging request messages. Each involved protocol handler transmits a paging request message to each of these BSS controllers for which that protocol handler is the designated source of paging messages for the point code and logical route; this paging request message includes a list of the BTSs in the LAI so that a BSS that includes portions of two or more LAIs can transmit a paging request only to the base transceiver stations serving that LAI. In an alternative version, not covered by the present GSM specification, the LAI is sent and the BSS translates to find the appropriate base transceiver station for paging.

An alternate approach is to make a translation within the protocol handler that receives the paging request message from the switching module to determine which protocol handlers of the WGSM should receive a multicast paging message that includes the point codes of the BSSs and the logical route for those BSSs involved in the paging, plus a list of base transceiver stations. Each of the determined recipients of this multicast message then translates the point codes and logical route to see if it is to transmit a paging message; if so it transmits the appropriate paging message. In this approach, the initial

14

translation to determine which protocol handlers may be involved in the process of transmitting paging request messages to base station controllers is performed in the single protocol handler that initially receives the paging request message. A disadvantage of this approach is that each of the protocol handlers that makes the initial translation needs a table for storing the translation information. The simpler translation of the preferred embodiment is only from the LAI to point codes, a relatively static translation. The updating of protocol handlers to respond to trouble conditions only affects the tables of protocol handlers actually transmitting data to the BSSs.

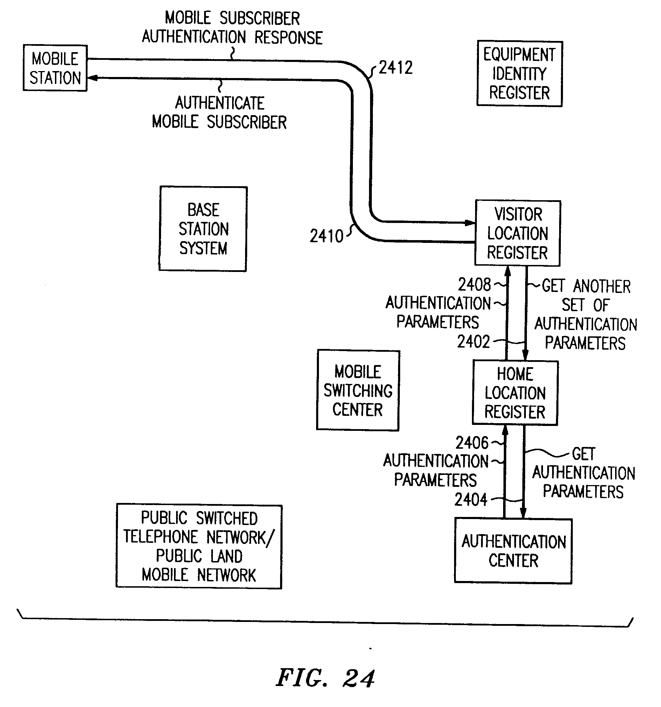

The page response 2310 received by one of the BSSs is returned (message 2312) to the mobile switching center, specifically, the WGSM. The WGSM then transmits a message 2314 to the wireless switching module which contains the VLR information for this mobile station to initiate the authentication process if necessary. Previously, the VLR has received from the authentication center via the HLR five sets of data used for authenticating the identity of the mobile station and for use as an encryption key. If the VLR has only one set left, then it obtains an additional set via the HLR from the authentication center, using messages 2402, 2404, 2406 and 2408 (FIG. 24). The VLR-WSM communicates to the mobile station an authentication request 2410 for it to perform algorithm calculation. The mobile station then communicates the result (message 2412) of the calculation to the VLR-WSM which compares the result with the authentication data it stores.

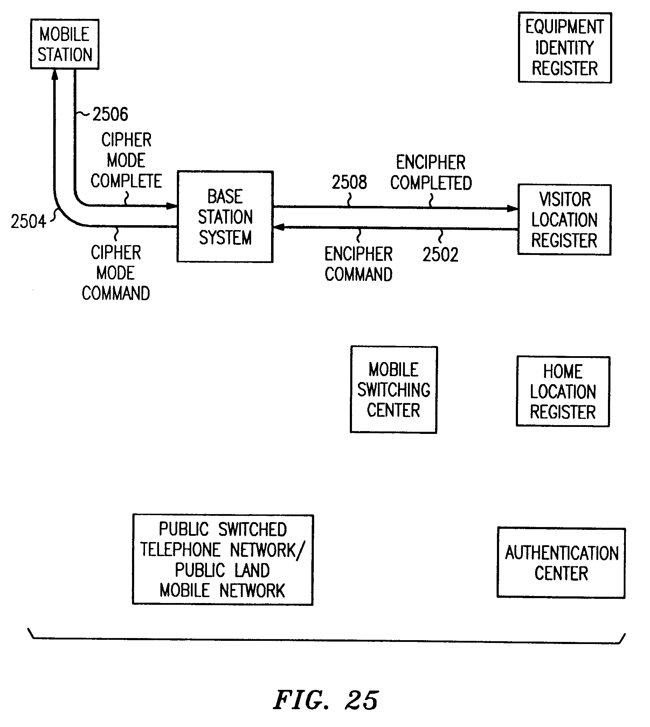

The VLR-WSM then transmits an encipher command (message 2502, FIG. 25), if necessary, to the BSS which transmits, over the radio channel, a cipher mode command 2504 requesting the mobile station to enter the cipher mode. The mobile station responds with a cipher mode complete message 2506 to the BSS and the BSS reports to the switching module containing the VLR that the encipher process has been completed (message 2508). The original encipher command sent from the VLR to the BSS includes the key for use in enciphering the signals transmitted between the mobile station and the BSS. The mobile station had previously received information for deriving the key during the authentication process.

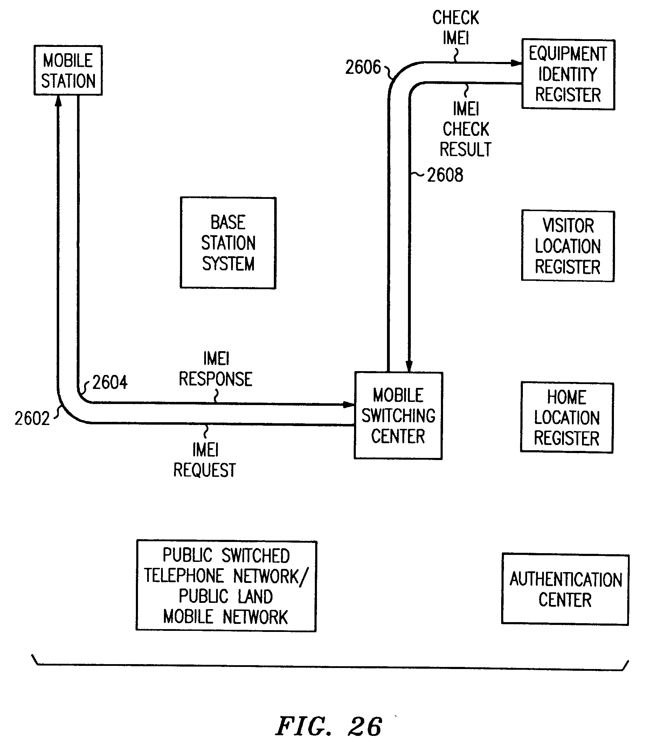

If the telecommunications operator has specified that an equipment identity check is required, the mobile switching center then requests (message 2602, FIG. 26) from the mobile station its international mobile equipment identification (IMEI). The mobile station responds with that information (message 2604) and this information is checked (action 2606) in the equipment identification register (EIR) data base also stored in the MSC for that mobile. The check result is returned (action 2608) from the EIR. The equipment validation is performed to insure that the mobile unit is authorized to make calls. Calls are only completed if both the VLR and the EIR data indicate that the mobile is authorized to make and/or receive calls.

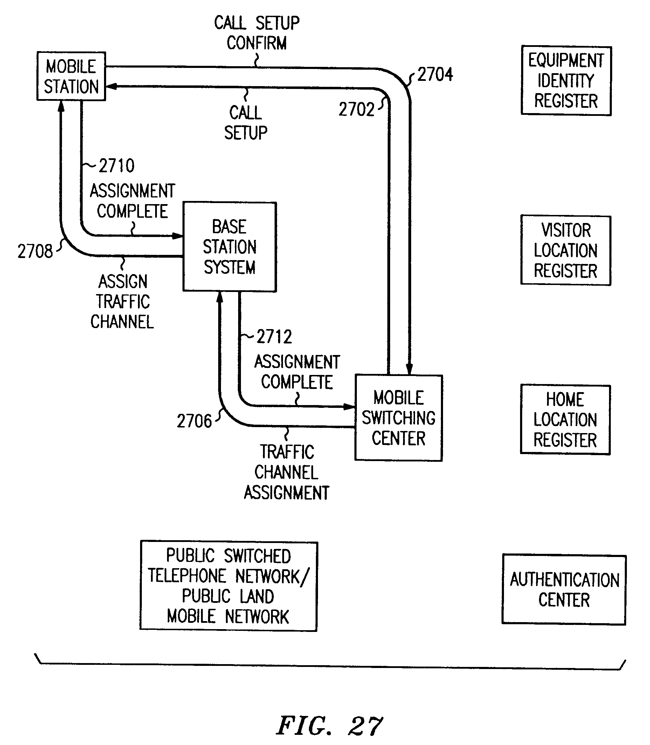

Thereafter, the mobile switching center sets up a call connection to the mobile station. It transmits a message 2702 (FIG. 27) including a transaction identification for all messages generated by the mobile station, related to this call. The mobile station responds with a call confirm message 2704. The mobile switching center then requests (message 2706) the base station to assign a traffic (i.e., voice or customer data) channel to this call. The BSS selects the radio frequency and channel and informs the mobile station (message 2708) of the same so that the mobile station can tune to this frequency and channel. The mobile station does so, reports (message 2710) that the channel assignment has been completed, which permits the BSS to report (message 2712) to the mobile switching center that the traffic channel has been assigned.

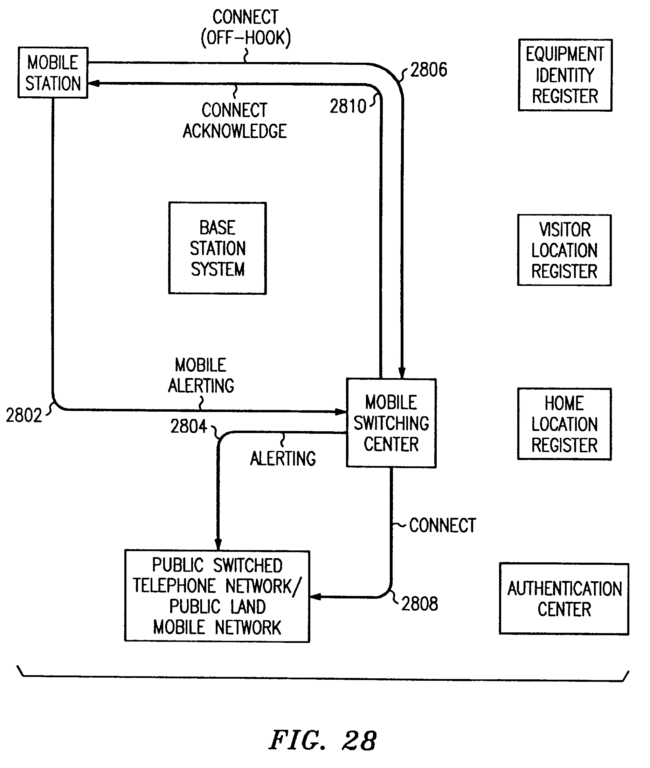

The mobile station responds to the previously received traffic channel assignment request by locally generating an alerting signal to the subscriber. An "alert" message 2802 (FIG. 28) is sent from the mobile station to the MSC to inform the MSC that mobile station user is being alerted. The mobile switching center transmits an audible tone to the caller (action 2804). When the called customer at the mobile station goes offhook, i.e., answers the call, the mobile station sends a connection indication 2806 to the mobile switching center, which forwards that connection indication to the far party (action 2808) and transmits a connection acknowledge message to the mobile station 2810.

In order to detect the fraudulent condition wherein two or more mobile stations have the same identity, a situation which should not occur and will occur only as a result of an attempt to fraudulently cause telecommunications charges to be incurred by the primary owner of that identification, the following steps are taken.

Each of a class of state transitions is examined to see if the particular state transition is likely, in view of prior state of the mobile station. Whenever a mobile station changes state to one of the specified states, the previous one of the specified states for that mobile station is examined and if the transition is unlikely, a record is made for the mobile telecommunications network administration. These records are an indication of possible fraud. The state transitions to which are examined are the following: attached mobile station, detached mobile station, page response, location update, service request, and cancel location (a message from an HLR to a VLR to indicate that the mobile has moved outside the area served by the MSC, and therefore, the VLR). Unlikely events include the reception of an attach, when the mobile station is already attached, a detach when the mobile station is already detached, the receipt of multiple page responses for a single page request of one mobile, the receipt of a location update while another update procedure or connection procedure is in progress; the receipt of a service request when a mobile station is detached, in a location update procedure, or during an attach or detach procedure; or a location update message received when a call is in progress.

Whenever a state change is one that is unlikely to occur, a peg count is made of the state change. The frequency of the unusual occurrences is displayed at a mobile switching control center or the Operation and Maintenance Center (OMC) so that a fraudulent use of an identification can be detected. If the count exceeds a threshold, a special message is displayed or printed.

The authentication process will now be described. The authentication process is initiated as a result of a service request by the mobile station or following a successful page of a mobile station, but is performed primarily under the control of the VLR. According to the wishes of the telecommunications operator, this authentication process may be performed every time a mobile station originates or a call is terminated to a mobile station. In addition, if the administration of the mobile switching system so desires, the authentication may take place whenever a location is updated for a mobile station that is in the power-on and idle state. In addition, authentication may be performed when a mobile station registers by turning on its power.

In the case of a request for service originated by a mobile station, the mobile station sends a message to the mobile switching center recording one of the requests discussed above. This message includes the IMSI (International Mobile Subscriber Identification) or a TMSI (Temporary Mobile Subscriber Identification). The choice of an IMSI or a TMSI as the primary identification mechanism is made by the system operator. The IMSI is a permanent number which is assigned to every mobile station. The TMSI is assigned to a mobile station only after an authentication, and has only local significance. If this is the first authentication request or an authentication request which for some reason has failed and the system administration is using TMSI identification, then the backup IMSI is used for the purpose of authenticating the customer and assigning a new TMSI. The source of data used in authentication is an authentication center which in the present system is present in each mobile switching module of the MSC. This authentication center (AUC) does not store any data for each customer. The purpose of the authentication center is to generate random numbers which are used in conjunction with data in the HLR to generate authentication data. Initially, at the time when a customer subscribes for service, that customer is assigned an initial key $K_i$ . This key and a random number (RAND) supplied from the authentication center are acted upon by a first algorithm (A3) to generate a secondary number, an authentication number, referred to as Signed Response (SRES), a result of manipulating the random number using the A3 algorithm. In addition, the random number and $K_i$ are acted upon by a second algorithm (A8) to generate an encryption key $K_c$. Values of RAND, SRES and $K_c$ are requested from HLR as needed by the VLR. In the preferred embodiment of the invention, five sets of RAND/SRES/ $K_c$ are generated and stored in the VLR each time a set of calculations is made.

When the authentication is needed, the MSC sends the random number to the MS. The MS retrieves $K_i$ from its initialization memory (which may be initialized at the time of the purchase of the mobile station) and calculates SRES and $K_c$ from the random number and the $K_i$ using algorithms A3 and A8. It then stores the $K_c$ in the main station and sends the SRES result to the mobile switching center. The mobile switching center verifies that the SRES value calculated by the mobile station matches the SRES value that has been stored in the VLR and was previously calculated. If the values match, this is a successful authentication and it is assumed that the two values of the key $K_c$ as stored in the MSC/VLR and in the mobile station are identical.

Note that with this arrangement, only the random number and SRES are transmitted over the air. The two independently generated values of the encryption key, $K_c$ , each generated from the random number and each generated using a value of $K_i$ which is also never transmitted through the air, are not transmitted over the air. Since a separate algorithm is used for deriving $K_c$ and SRES, the fact that SRES and RAND are transmitted over the air does not permit an interloper to discover $K_c$.

In case authentication fails, if the system administration uses TMSI, then the IMSI is sent as a backup in case the TMSI for one reason or another became garbled. If another authentication using the IMSI is attempted and if that authentication is successful, a new TMSI is sent and actions which are based on a successful authentication can be performed. If the system administration uses an IMSI and authentication fails or if authentication fails following an IMSI backup of a TMSI, then all service except emergency service is normally denied to that mobile station.

Note that both the TMSI and the IMSI may be sent over the airwaves without compromising security since these values are useless if the $K_i$ corresponding to that IMSI is not available to a potential interloper.

Some administrations may choose not to perform an authentication on every call. If this is the case and an IMSI or TMSI has been intercepted, then a fraudulent call may be made, or a call may be fraudulently received. However, if this is a call on which authentication is made in an administration which chooses to authenticate some percentage of its calls, then authentication will fail and the failure of authentication is a warning to the administration that the particular IMSI or TMSI has been compromised.

Only a single pair of algorithms is normally used at any one time. It is possible for a system administration to vary between pairs of such algorithms but there are no plans at this time to assign two different mobiles different algorithm pairs.

A new class of problems arises when a mobile travels outside the range of the base station systems controlled by a mobile switching center. This problem is called the inter-mobile switching center (inter-MSC) handoff problem.

FIGS. 29-32 illustrate an inter-MSC handover. Originally (FIG. 29), mobile station 1504 is connected to another telephone via the public switched telephone network 2912 through a first MSC hereinafter referred to as the call controlling MSC. It is connected through base station system 2902, hereinafter referred to as the old base station system, through wireless switch module 2906, hereinafter referred to as the old wireless switch module, to pivot switch module 2910 and thence to the public switched telephone network 2912. Each of the switch modules discussed herein is connected to a plurality of ports, each port being connected to one of a port on the communications module (CM), a trunk to the PSTN/PLMN, a line to a land based customer, or a trunk to a base station system. The ports to the CM are on one side of a time slot interchanger (TSI) unit of the module, the other ports being on the other side of the TSI unit. In this configuration, mobile station 1504 reports signal strength measurements to base station system 2902 which detects that the signal strength from the serving base station is no longer adequate and transmits a message, comprising an ordered list of candidate base stations for further communicating with the mobile station to the old wireless switch module 2906. WSM 2906 selects one of the candidate base stations. If the base station selected by wireless switch module 2906 to communicate with mobile station 1504 after the handover is in a different MSC, referred to hereinafter as the non-controlling MSC, then a message is sent to the non-controlling MSC to find out if a radio is available in the selected base station. If so, the non-controlling MSC hunts a trunk (2961) to the base station which reserves the radio and sends back a confirmation.

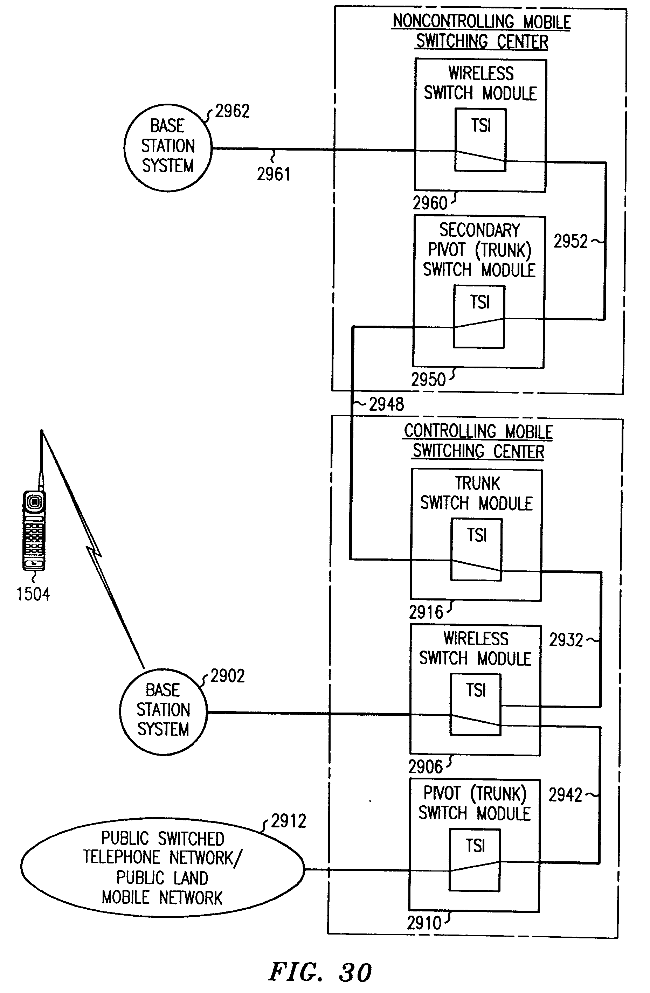

Thereafter the connections shown in FIG. 30 are established. An output of WSM 2906 is connected via a (trunk) switch module, in this case SM 2916, to a trunk 2948 connected to the non-controlling MSC. Trunk 2948 is selected by the administrative module of the controlling MSC. Trunk 2948 is then connected in the non-controlling MSC through (trunk) switch module 2950 via connection 2952 to new wireless switch module 2960 and thence via trunk 2961 to new base station system 2962. In base station system 2962, trunk 2961 is connected to the selected radio in the selected base station. The term (trunk) switch module is used because the module can be either a trunk, or a trunk and line, or either of these modules also serving base station systems.

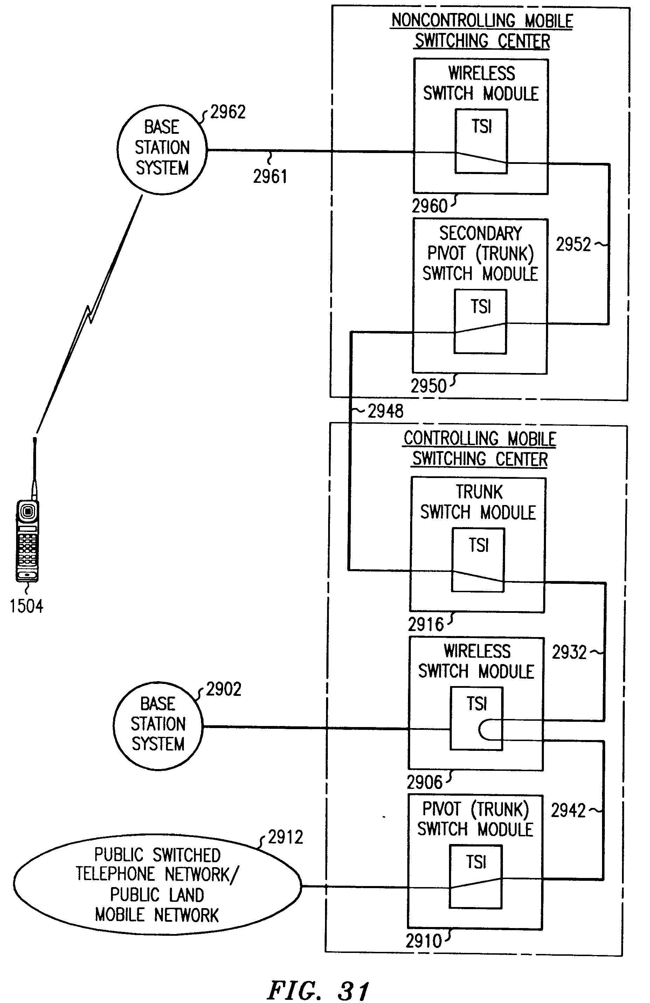

The wireless switch module 2906 sends a signal to base station 2902 to cause mobile station 1504 to retune to the frequency of the radio in the new base station system 2962. After a short wait, wireless switch module 2906 removes the connection in its time slot interchange unit that previously connected path 2942 to base station system 2902 and instead connects path 2942 to path 2932 which is connected to switch module 2916 and thence to the new base station system. At this point, the mobile station, having retuned, is served by the new base station system. After these connections have been set up, the configuration of FIG. 31 is established.

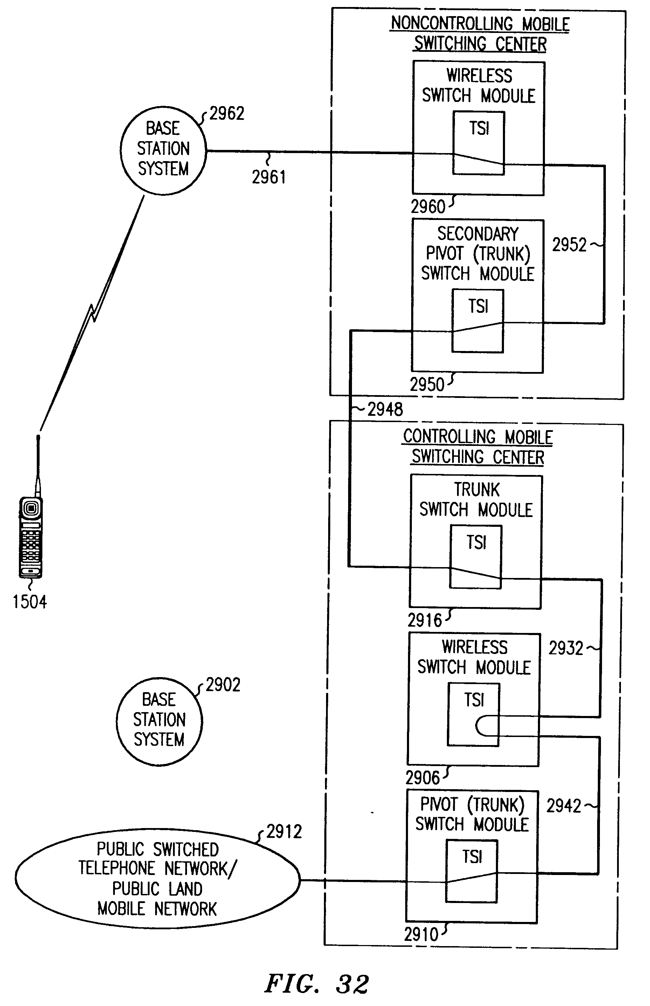

FIG. 32 illustrates the configuration of the connection after the mobile station 1504 is served by the new base station system 2962 and the extraneous paths, such as the paths to the old base station system, have been removed. Note that the (old) wireless switch module 2906 is still in the path as is the original pivot switch module 2910. Control of the call is maintained in wireless switch module 2906 and will remain with that switch module until the connection is either disconnected or the mobile 1504 is served by another wireless switch module of the call controlling MSC. Retention of the call control by WSM 2906 simplifies many software control problems, especially those which may be associated with subsequent handovers to a third MSC, which is required by the GSM specification. Handovers within the non-controlling MSC are performed under the control of WSM 2960 which, if necessary, passes control to another WSM of the non-controlling MSC which serves another base station system for continuing the call. The secondary pivot switch module 2950 in the non-controlling MSC remains in the path as long as the mobile station 1504 is served from the non-controlling MSC. The wireless switch module that contains the base VLR data for mobile station 1504 retains this information throughout the call. When it is necessary to update this information, in response to a mobile subscriber originated request, the request is passed back to the controlling MSC which forwards the request to the VLR WSM.

If after the call is disconnected, the mobile station is still in non-controlling MSC territory, a location update is sent from the MS. This will create a VLR in the formerly non-controlling MSC and the HLR will request the old VLR in the first MSC to be erased.

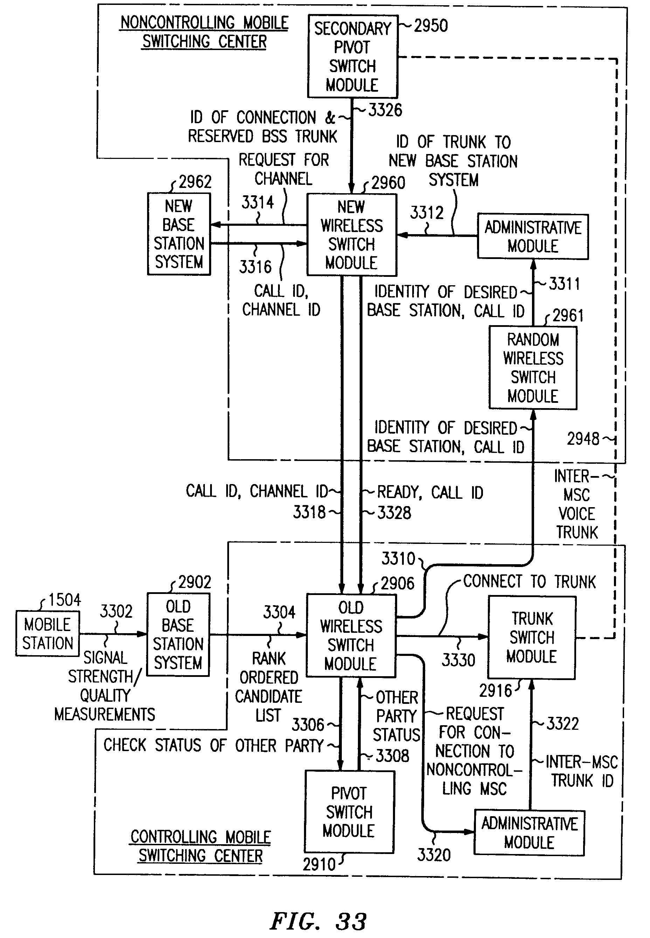

FIGS. 33-35 summarize the messages exchanged among the various switching modules, base stations, mobile station and administrative modules in performing the inter-MSC handoff described above. The mobile station 1504 periodically sends signal strength/quality measurements of nearby BSSs to the old base station system 2902 (message 3302). If the old base station system recognizes that the present signal strength and quality is inadequate, the old base station system examines the signal strength quality measurements and sends a rank ordered candidate list of the base stations that can serve the mobile station at this time to the old WSM (message 3304). The old WSM (2906) examines the candidate list and discovers that the best candidate is in a base station served by another MSC, the non-controlling MSC. The old wireless switch module 2906 sends a message 3306 to the pivot switch module 2910 to check whether the other party in the connection is in the handover state. If that is the case, then the handover must be deferred. Pivot switch module 2910 returns a message 3308 which we assume in this case confirms either that the other party is not in the act of being handed over. In that case, the old WSM 2906 sends a message 3310 to the non-controlling MSC indicating the identity of the desired base station and otherwise identifying the call. This message is terminated in a randomly selected WSM (designated connection SM 2961 which sends a message 3311 to the administrative module of the non-controlling MSC and the administrative module selects a trunk in a new WSM 2960 to the new base station system 2962 and sends message 3312 to inform the new WSM. The new WSM 2960 sends message 3314 to the new BSS to request radio frequency and time slot (channel) for use following the handover. This radio frequency and time slot are then reserved for use in the inter-MSC handover. In this case reservation is desirable since the cost in resource utilization of attempting to untangle a connection if subsequently it is found that no radio is available is excessive: that cost is much less if the handover is an intra-MSC handover as previously described. The new base station system then sends message 3316 to the new WSM 2960 and the latter then allocates a handover number and sends a message 3318 back to the old WSM 2906 that includes a handover number for the controlling MSC to route the call to the non-controlling MSC and for the subsequent association of the call to the new BSS trunk and the radio, frequency, and channel number so that the old WSM can subsequently cause the mobile station to retune to the right new channel. The old WSM then requests the administrative module of the controlling MSC to find a trunk to the non-controlling MSC and to supply connection data for connecting the old WSM to that trunk (message 3320). The administrative module sends message 3322 to the trunk SM (2916) which establishes the connection between WSM 2906 and trunk 2948 and establishes a trunk connection with the trunk SM (2950) of the non-controlling MSC, using trunk signaling. Trunk SM 2950 associates the trunk with the new WSM (2960) using the handover number and sends message 3326 to the new WSM 2960 to set up a connection between trunk 2948 and WSM 2960. The radio channel had already been selected and identified in message 3314. The new WSM returns a ready message 3328 to the old WSM 2906 of the controlling MSC. At this point, the connections shown in FIG. 30 have been established.

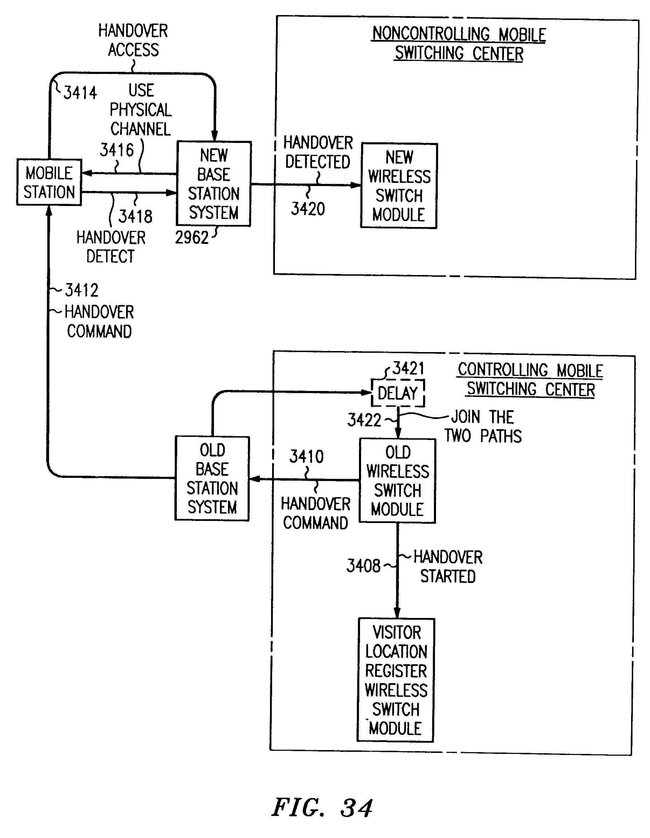

FIG. 34 shows the next operations. The old wireless switch module sends a message 3408 to the visitor location register wireless switch module within the controlling MSC indicating that handover has been started. At this time, all messages arriving from the network for the MS will be queued. The old WSM sends a handover command 3410 to the old base station system which in turn causes a handover command 3412 to be sent to the mobile station 1504. Mobile station 1504 sends a handover access message 3414 to the new base station system 2962, and the new base station system sends message 3416 to the mobile station to establish the connection. The mobile station, as soon as it detects a new signal on the new channel, sends a handover detect message 3418 to the new base station system. The new base station system sends a handover detected message 3420 to the new wireless switch module. In the meantime, the old WSM 2906 waits a prespecified amount of time (block 3421 indicating a delay) to join the two paths as is shown in the configuration of WSM 2906 in FIG. 31. At the same time, the connection through the time slot interchange of WSM 2906 connecting path 2942 to base station system 2902 is broken. Following these actions, the path configuration is as shown in FIG. 31.

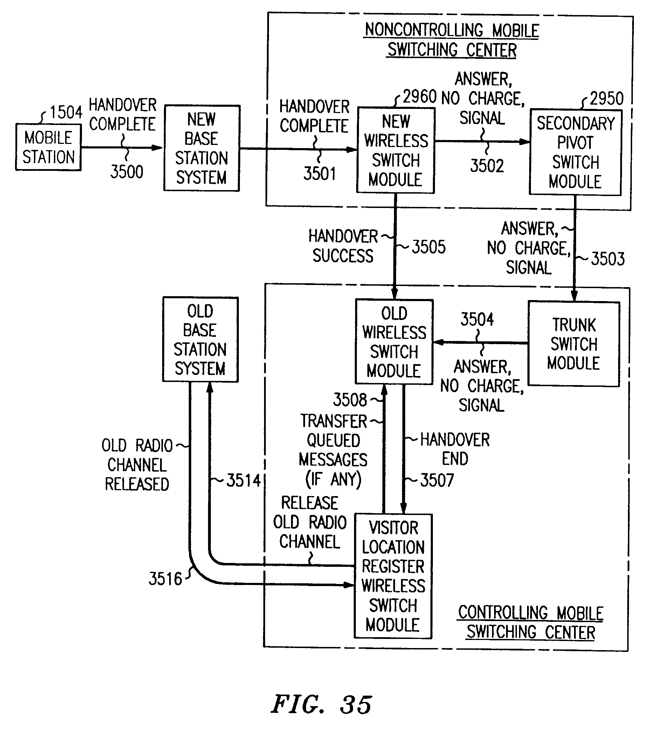

FIG. 35 illustrates the actions necessary to complete the inter-MSC handover and achieve the configuration shown in FIG. 32. Mobile station 1504 reports that the handover is now complete (message 3500), and this message 3501 is relayed to the old WSM.

The old WSM has been notified of the completion of the handover in the following way. When the message 3500 is received in the new WSM and a special answer signal 3502 indicating no additional billing is to occur is sent to the secondary pivot switch module (2950) which relays message 3503 back to trunk SM (2916) and message 3504 to the old WSM (2906) in the controlling MSC. Meanwhile, a message (3505) is sent from the new wireless SM (2960) to the old WSM (2906), indicating that the handover has been completed and the old WSM commences to transmit message 3507 to the VLR indicating the completion of handover as described above. The VLR transfers any queued messages 3508 to the old WSM. Finally, the VLR-WSM sends a message 3514 to the old base station system to release the old radio channel and the old base station system sends a confirmation message 3516 that the old radio channel has been released back to the VLR-WSM.

FIG. 36 is a diagram of a time slot interchange unit and its connection to a time multiplexed switch to illustrate how wireless switch module 2906 changes the path configuration between that illustrated in FIG. 30 and that illustrated in FIG. 31. Time slot interchange unit (TSIU) 3602 is connected to time multiplexed switch 3620 which is connected to the other TSIUs in a mobile switching center. In the initial configuration of the TSIU of WSM 2906 as shown in FIG. 31, input 3604 and output 3622 are connected to base station system 2902. The input goes through selector 3606, which under the control of control RAM 3610, permits that input to go into the TSI receive RAM 3608, and thence to the time multiplexed switch via path 3612. Similarly, the output of the time multiplexed switch 3614 goes through selector 3616 under the control of control RAM 3618 into the TSI transmit RAM 3620 which transmits the output of the transmit RAM to the connected base station system at the appropriate output time slot under the control of the control RAM 3618. When the configuration is changed to that shown in FIG. 31 wherein the input from the time multiplexed switch is reconnected through TSIU 3602 back to another input to the time multiplexed switch for connection to trunk switch module 2916. In particular, time slots used for this purpose are switched through the TSIU using the alternate position of selector 3606. The output of the time multiplexed switch passes through selector 3616, the TSI transmit RAM 3620, but at the appropriate time is switched back via selector 3606 into the TSI receive RAM 3608 for transmission to the time multiplexed switch 3620. Two time slots are required for performing the switch, one for each of the directions of transmission. The control RAMs control not only which byte of the transmit or receive RAM is to be forwarded during any particular time slot, but also the choice of which of the two inputs to selectors 3606 and 3616 are to be gated into the transmit and receive RAMs.

The following describes a subsequent inter-MSC handover to a third MSC. At the beginning of this type of handover, mobile station 1504 is connected to the non-controlling MSC as shown in FIG. 32. In this configuration, the base station connected to the non-controlling MSC initiates the handover the same way as previously described in the basic handover arrangement for the base station connected to the controlling MSC. When the WSM 2960 determines that the handover is to a third MSC (target MSC), a message is sent to the call controlling MSC (note that the call control stays in the switch that first handles the call) for it to request the third MSC to hunt a trunk to the new base station. The base station then reserves the radio resource and sends back a confirmation to the call controlling MSC.

Thereafter the connections shown in FIG. 37 are established. An output of WSM 2906 is connected via a (trunk) switch module, in this case SM 2918, to a trunk 3702 connected to the target MSC 3700. The selection of the trunk is accomplished the same way as that described for the handover to the second MSC (2970) of FIG. 32.

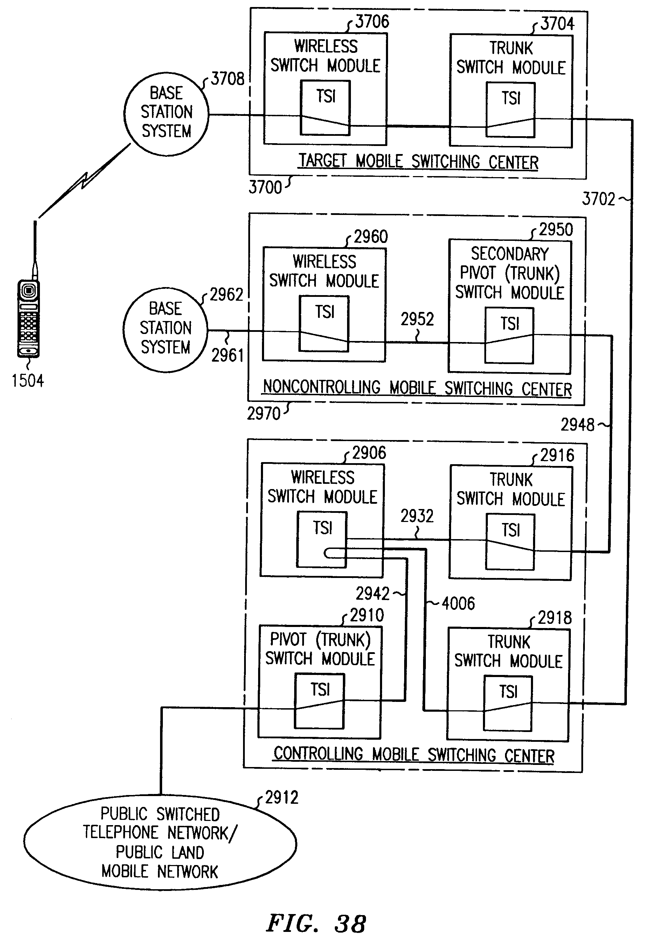

When the connection is established, the WSM 2906 sends a signal to the non-controlling MSC 2970 which then requests the mobile station 1504 to retune to the new base station. After a predetermined wait, the WSM 2906 disjoins the path 2942 to the path 2932 connected to the non-controlling MSC and joins the path 2942 to the path 4006 to the path connected to the target MSC. After this path rearrangement, the configuration of FIG. 38 is established.

When the mobile station signals the non-controlling MSC 2970 that the handover is accomplished, the controlling MSC signals the non-controlling MSC 2970 to release all the resources in that MSC, and the trunk 2948, the path 2932 and the connection in trunk switch module 2916 are also released.

For subsequent handovers back to the call controlling MSC, the controlling MSC will start an intra-MSC handover procedure when it has determined that the target base station system is controlled by that controlling MSC. When a path is established to the new base station, the controlling MSC will signal the non-controlling MSC to request the mobile station to retune. When the mobile station has retuned to the new base station in the controlling MSC and notified the controlling MSC, the controlling MSC will request the non-controlling MSC to release all its resources to the old base station and also release its own trunk to the non-controlling MSC.

It is to be understood that the above description is only of one preferred embodiment of the invention. Numerous other arrangements may be devised by one skilled in the art without departing from the scope of the invention. The invention is thus limited only as defined in the accompanying claims.

## APPENDIX A
## ACRONYMS AND ABBREVIATIONS

| | |
|---|---|
| AUC | Authentication Center |
| AM | Administrative Module |
| BSC | Base Station Controller |
| BSS | Base Station System |
| BSSAP | Base Station System Application Part |
| BSSOMAP | BSS Operation Maintenance and Administration Part |
| BSSMAP | Base Station System Management Application Part |
| BTS | Base Transceiver Station |
| CM | Communications Module |
| DFI | Digital Facility Interface |
| DTAP | Direct Transfer Application Part |
| EIR | Equipment Identity Register |
| GSM | Global Systems for Mobile Communications |
| GSM | Global Switching Module |
| ISDN | Integrated Services Digital Network |
| ISO | International Standards Organization |
| HLR | Home Location Register |
| IMEI | International Mobile Equipment Identification |
| IMSI | International Mobile Subscriber Identification |
| ISUP | ISDN User Part |
| LAI | Location Area Identifier |
| OMC | Operations and Maintenance Center |
| MAP | Mobile Application Part |
| MS | Mobile Station (personal communication station) |
| MSC | Mobile Switching Center |
| MSRN | Mobile Station Routing Number |
| MTP | Message Transport Part |
| PH | Protocol Handler |
| PLMN | Public Land Mobile Network |
| PSTN | Public Switched Telephone Network |

| PSTN GSM | PSTN Global Switch Module |
| PSU | Packet Switching Unit |
| RAND | Random Number |
| SCCP | Signaling Connection Control Part |
| SIM | Subscriber Identity Module |
| SM | Switching Module |
| SMG | Special Mobile Group |
| SMP | Switching Module Processor |
| SRES | Signed Response |
| SS7 | Signaling System 7 |
| TC | Transaction Capabilities |
| TCAP | Transaction Capabilities Application Part |
| TMSI | Temporary Mobile Subscriber Identification |
| TSIU | Time Slot Interchange Unit |
| TUP | Telephone User Part |
| WGSM | Wireless Global Switching Module |
| WSM | Wireless Switch Module |
| VLR | Visitor Location Register |

## Claims

1. In a cellular mobile telecommunications network, a method of handing over communications to a mobile radio station from a first base station system to a second base station system, the first and second base stations being served by a first and second mobile telecommunications switching system, respectively, a communication path to said mobile station initially comprising a connection from a first port to a second port of a switching network of said first switching system, comprising the ordered steps of:

    establishing a connection from a third port of said switching network via an interoffice trunk to said second base station system;

    sending a request to said first base station to cause said mobile station to retune to a channel of said second base station; and

    concurrently connecting said first port to said switching network to said third port and disconnecting said first port from said second port of said switching network.

2. The method of claim 1 wherein said concurrently connecting step comprises the step:

    changing a control memory of a time slot interchange unit of said switching network to steer time slots, previously steered from and to said second port, from and to said third port.

3. The method of claim 1 wherein said sending step comprises sending a signal requesting said mobile station to send a signal from said mobile station to said second base station system over a channel of said second base station system further comprising:

    receiving a message from said second switching system to said first switching system to perform the concurrently connecting step in response to said second switching system establishing a connection to said second base station system.

4. The method of claim 1 further comprising:

prior to said establishing step, said first base station receiving signal strength measurement data from said mobile station; and

determining whether a handover to a transceiver served by a base station system served by said second switching system is required and responsive to said determination, transmitting a request to initiate a handover to said second switching system.

5. The method of claim 1 wherein said first and third ports are on the same side of said switching network.

6. In a cellular mobile telecommunications network, apparatus for handing over communications between a mobile radio station and a first base station system to a second base station system, the first and second base stations being served by a first and second mobile telecommunications switching system, respectively, the apparatus in the first switching system comprising:

a switching network for establishing connections between ports of said switching network; and

processor means operative under the control of a program for controlling establishment of a connection from a first port of said switching network connected to one end of a mobile call to a second port of said switching network connected to said first base station; for controlling establishment of a subsequent connection from a third port of said switching network to a trunk connected to said second switching system; for requesting said first base station system to send a signal to said mobile unit to retune to a channel of said second base station system; and for controlling a concurrent connection of said first port to said third port, and disconnection of said first port from said second port.

7. The apparatus of claim 6 wherein said switching system is modular and said processor means comprises module processor means for each module.

8. The apparatus of claim 7 wherein a first module processor means controls said concurrent connection and controls said first base station system.

9. The apparatus of claim 6 wherein said switching network has two sides and wherein said first and third ports are on a common side.

10. The apparatus of claim 6 wherein said switching network comprises a time slot interchange unit, and wherein said controlling a concurrent connection and disconnection comprises controlling a control memory of said time slot interchange unit to steer time slots, previously steered from and to said second port, from and to said third port.

*FIG. 1*

PUBLIC SWITCHED
TELEPHONE NETWORK/
PUBLIC LAND
MOBILE NETWORK

SS7

220

BILLING
CENTER

X.25

226

EXTERNAL
SERVICE
CENTER

X.25

224

CUSTOMER
ADMINISTRATION
SYSTEM

RS-232

222

OPERATIONS
MAINTENANCE
CENTER

X.25

SS7
MTCE

210

MOBILE
SWITCHING
CENTER

HOME
LOCATION
REGISTER — 212

VISITOR
LOCATION
REGISTER — 214

AUTHENTICATION
CENTER — 216

EQUIPMENT
IDENTITY
REGISTER — 218

SS7
CALL PROC
& MTCE

VOICE

204

BASE STATION
SYSTEM

BASE
STATION
CONTROLLER

BASE
TRANSCEIVER
STATION

~ 206

MOBILE
STATION ~ 202

FIG. 2

| LAYER | SWITCH/SWITCH | | MOBILE SWITCHING CENTER/ MOBILE SWITCHING CENTER/ VISITOR LOCATION REGISTER/ HOME LOCATION REGISTER/ EQUIPMENT IDENTITY REGISTER | MOBILE SWITCHING CENTER/ BASE STATION SYSTEM | MOBILE SWITCHING CENTER/ MOBILE STATION |
|---|---|---|---|---|---|
| APPLICATION 7 | TELEPHONE USER PART | ISDN USER PART | MOBILE APPLICATION PART / TRANSACTIONS CAPABILITIES APPLICATION PART / TRANSACTIONS CAPABILITIES | RADIO SUBSYSTEM APPLICATION PART / BASE STATION SYSTEM MANAGEMENT APPLICATION PART | RADIO SUBSYSTEM APPLICATION PART / DIRECT TRANSFER APPLICATION SUBPART |
| NETWORK 3 | | CO | SCCP CONNECTIONLESS | | SCCP–CO |
| NETWORK 3 | SS7 MTP–3 CCITT Q.701–Q.707 | | | | |
| DATA 2 | SS7 MTP–2 CCITT Q.701–Q.707 | | | | |
| PHYSICAL 1 | SS7 MTP–1 CCITT Q.701–Q.707 | | | | |

*FIG. 3*

*FIG. 4*

FIG. 5

MOBILE SWITCHING CENTER

COMMUNICATION MODULE ⌐606

610

MESSAGE DELIVERY PROTOCOL HANDLER

SWITCH MODULE PROCESSOR

WIRELESS SWITCH MODULE

610

MESSAGE DELIVERY PROTOCOL HANDLER

SWITCH MODULE PROCESSOR

WIRELESS SWITCH MODULE

604

PROTOCOL HANDLER

PROTOCOL HANDLER

PROTOCOL HANDLER

WIRELESS GLOBAL SWITCH MODULE

BASE STATION SYSTEM ⌐602

BASE STATION SYSTEM ⌐602

OPERATIONS MAINTENANCE CENTER

*FIG. 6*

FIG. 7

*FIG. 8*

FIG. 9

MOBILE SUBSCRIBER
AUTHENTICATION RESPONSE

1004

1002

AUTHENTICATE
MOBILE SUBSCRIBER

| VISITOR
LOCATION
REGISTER
WIRELESS
SWITCH
MODULE |

REQUEST
BSS TRUNK

1006

1010 ~

~WSM & BSS
TRUNK
ASSIGNED

| MOBILE
STATION |

| BASE
STATION
SYSTEM |

| WIRELESS
GLOBAL
SWITCH
MODULE |

| WIRELESS
SWITCH
MODULE |

1008

| ADMINISTRATIVE
MODULE |

ASSIGN
WSM & BSS
TRUNK

| SWITCH
MODULE |

FIG. 10

FIG. 11

*FIG. 12*

VISITOR
LOCATION
REGISTER
WIRELESS
SWITCH
MODULE

CONNECTION
ACKNOWLEDGMENT

1314

CONNECTION
ESTABLISHED

1312

MOBILE
STATION

BASE
STATION
SYSTEM

WIRELESS
GLOBAL
SWITCH
MODULE

WIRELESS
SWITCH
MODULE

ADMINISTRATIVE
MODULE

ALERTING

1306

~NETWORK
SETUP

NETWORK ALERTING
(RINGING)

NETWORK~
ALERTING

~1304

1302

~1310

PUBLIC SWITCHED
TELEPHONE NETWORK/
PUBLIC LAND
MOBILE NETWORK

GLOBAL
SWITCH
MODULE

SWITCH
MODULE

1308

NETWORK SETUP
(ANSWER)

**FIG. 13**

**FIG. 14**

*FIG. 15*

*FIG. 16*

*FIG. 17*

*FIG. 18*

FIG. 19

**FIG. 20**

OLD RADIO
CHANNEL
RELEASED

VISITOR
LOCATION
REGISTER
WIRELESS
SWITCH
MODULE

2116

RELEASE
OLD RADIO
CHANNEL

~2114

HANDOVER ~
END

~2104

RELEASE OLD
TIME SLOT
AND TRUNK

OLD
BASE
STATION
SYSTEM

OLD
WIRELESS
SWITCH
MODULE

2112

MOBILE
STATION

2106

HANDOVER ~
COMPLETE

2102 ~

TRANSFER
QUEUED
MESSAGES
(IF ANY)

ADMINISTRATIVE
MODULE

2100

NEW
BASE
STATION
SYSTEM

2101

NEW
WIRELESS
SWITCH
MODULE

2108

~RELEASE
OLD PATH

HANDOVER
COMPLETE

HANDOVER
COMPLETE

END OF
QUEUED
MESSAGE
TRANSFER

PIVOT
SWITCH
MODULE

2110

*FIG. 21*

43

*FIG. 22*

FIG. 23

**MOBILE SUBSCRIBER AUTHENTICATION RESPONSE**

MOBILE STATION

2412

**AUTHENTICATE MOBILE SUBSCRIBER**

EQUIPMENT IDENTITY REGISTER

BASE STATION SYSTEM

2410

VISITOR LOCATION REGISTER

2408 — AUTHENTICATION PARAMETERS

GET ANOTHER SET OF AUTHENTICATION PARAMETERS

2402

MOBILE SWITCHING CENTER

HOME LOCATION REGISTER

2406 — AUTHENTICATION PARAMETERS

GET AUTHENTICATION PARAMETERS

2404

PUBLIC SWITCHED TELEPHONE NETWORK/ PUBLIC LAND MOBILE NETWORK

AUTHENTICATION CENTER

*FIG. 24*

FIG. 25

FIG. 26

FIG. 27

*FIG. 28*

1504

2902

BASE
STATION
SYSTEM

2912

PUBLIC SWITCHED
TELEPHONE NETWORK/
PUBLIC LAND
MOBILE NETWORK

CONTROLLING MOBILE
SWITCHING CENTER

WIRELESS
SWITCH MODULE

TSI

2906

PIVOT (TRUNK)
SWITCH MODULE

TSI

2910

2942

*FIG. 29*

**NONCONTROLLING MOBILE SWITCHING CENTER**

**WIRELESS SWITCH MODULE**

TSI

2962

BASE STATION SYSTEM

2961

2960

**SECONDARY PIVOT (TRUNK) SWITCH MODULE**

TSI

2952

2950

~2948

**CONTROLLING MOBILE SWITCHING CENTER**

**TRUNK SWITCH MODULE**

TSI

1504

2916

**WIRELESS SWITCH MODULE**

TSI

2932

2902

BASE STATION SYSTEM

2906

**PIVOT (TRUNK) SWITCH MODULE**

TSI

2942

2912

PUBLIC SWITCHED TELEPHONE NETWORK/ PUBLIC LAND MOBILE NETWORK

2910

*FIG. 30*

NONCONTROLLING MOBILE
SWITCHING CENTER

WIRELESS
SWITCH MODULE

TSI

2960

SECONDARY
PIVOT (TRUNK)
SWITCH MODULE

TSI

2952

2950

BASE
STATION
SYSTEM

2962

2961

~2948

1504

CONTROLLING MOBILE
SWITCHING CENTER

TRUNK
SWITCH MODULE

TSI

2916

WIRELESS
SWITCH MODULE

TSI

2906

2932

BASE
STATION
SYSTEM

2902

PIVOT (TRUNK)
SWITCH MODULE

TSI

2910

2942

PUBLIC SWITCHED
TELEPHONE NETWORK/
PUBLIC LAND
MOBILE NETWORK

2912

*FIG. 31*

53

*FIG. 32*

*FIG. 33*

**FIG. 34**

**FIG. 35**

**FIG. 36**

*FIG. 37*

**FIG. 38**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 174 419 (ANT NACHRICHTENTECHNIK GMBH ET AL.)<br>* page 3, line 3 - line 12 *<br>* page 4, line 4 - line 25 *<br>* page 6, line 34 - page 7, line 35 *<br>* claim 1 * | 1,4-6,9 | H04Q7/04<br>H04B7/26 |
| X | EP-A-0 438 099 (ALCATEL CIT)<br>* column 3, line 24 - line 39 *<br>* column 5, line 6 - line 56 * | 1,4-6 | |
| A<br>X | US-A-4 398 063 (HASS ET AL)<br>* column 2, line 3 - line 31 *<br>* column 5, line 52 - line 66 *<br>* column 7, line 13 - line 64 *<br>* column 9, line 3 - line 51 * | 1,3<br>6 | |
| | | | TECHNICAL FIELDS SEARCHED (Int. Cl.5 )<br><br>H04Q |

The present search report has been drawn up for all claims

| Place of search | Date of completion of the search | Examiner |
|---|---|---|
| THE HAGUE | 17 AUGUST 1993 | BEHRINGER L.V. |

EPO FORM 1503 03.82 (P0401)